# EUROPÄISCHE PATENTSCHRIFT

(11) **EP 1 691 949 B1**
(45) Veröffentlichungstag und Bekanntmachung des Hinweises auf die Patenterteilung: **23.02.2011**
(21) Anmeldenummer: 04803734.5
(22) Anmeldetag: 10.12.2004
(51) Int. Cl.: B23K 26/08

(54) **ORBITALSCHWEISSVORRICHTUNG FÜR DEN ROHRLEITUNGSBAU**
ORBITAL WELDING DEVICE FOR PIPELINE CONSTRUCTION
DISPOSITIF DE SOUDAGE ORBITAL POUR CONSTRUCTION DE TUYAUTERIES

(30) Priorität: 10.12.2003 US 528189 P
(43) Veröffentlichungstag der Anmeldung: 23.08.2006
(73) Patentinhaber: VIETZ GmbH, 30455 Hannover (DE)
(72) Erfinder: VIETZ, Eginhard, Werner, 30926 Seelze (DE); VOLLERTSEN, Frank, 28357 Bremen (DE); KOHN, Harald, 28757 Bremen (DE); THOMY, Claus, 27729 Hambergen (DE)
(74) Vertreter: Lins, Edgar
(86) Internationale Anmeldenummer: PCT/EP2004/014089
(87) Internationale Veröffentlichungsnummer: WO 2005/056230

(56) Entgegenhaltungen:
- EP-A- 0 852 984
- WO-A-92/03249
- FR-A- 2 812 227
- RU-C- 2 229 367
- US-A- 4 429 211
- US-A- 4 533 814
- US-A- 4 591 294
- US-A- 5 601 735
- US-A- 5 796 068

## Beschreibung

Die Erfindung betrifft eine Orbitalschweißvorrichtung für den mobilen Einsatz beim Rohrleitungsbau gemäß den Merkmalen des Oberbegriffs des Patentanspruchs 1. FR 2812227A1 offenbart eine solche orbitalschweiβvorrichtung.

Vorrichtungen zum Schweißen von Rohren entlang des Rohrumfangs sind seit langem bekannt und werden als Orbitalschweißvorrichtungen bezeichnet. Im Durchmesserbereich von 50 mm bis über 1.500 mm und im Wanddickenbereich von 2,5 mm bis über 25 mm haben die mobilen Orbitalschweißverfahren die zuvor angewande Muffenverbindungs- und Schraubenverbindungstechnik im Wesentlichen abgelöst. Während die meisten Industrieschweißanlagen stationär in von Umgebungseinflüssen abgeschirmten Industriehallen betrieben werden oder zumindest die Schweißarbeiten an einem stationären Produkt durchgeführt werden, bewegen sich die Produktionsmittel bei Linienbaustellen des Rohrleitungsbaus, beispielsweise des Pipelinebaus, entlang des fertig zu stellenden Produkts und sind dabei allen Einflüssen der wechselnden Umgebung und der unterschiedlichen Witterung ausgesetzt. Oft steht nur eine sehr eingeschränkte Infrastruktur zur Verfügung, weshalb auf eine feste Strom-, Wasser- und/oder Gasversorgung, wie sie bei stationären Industrieschweißanlagen selbstverständlich sind, vollkommen verzichtet werden muss, so dass auf mobile Generatoren, mobile Wärmetauscher und transportable Fluid- und Gastanks zurückgegriffen werden muss, die beispielsweise auf mindestens einem Transportfahrzeug längs zur Rohrleitung mittransportiert werden. Rohrschweißarbeiten sind regelmäßig neben dem herzustellenden Rohrgraben oder im Rohrgraben selbst bei liegender Rohrachse in Zwangslage durchzuführen. Die sich durch unterschiedlichste Witterungsverhältnisse, ungünstige ergonomische Voraussetzungen und dem Erfordernis der Anpassung an unterschiedliche Gegebenheiten ergebenden Baustellenbedingungen sind von grossem Einfluss auf die Güte des Schweissergebnisses. Aus diesen Gegebenheiten haben sich verschiedene Schweisstechniken und Schweissverfahren entwickelt, die sich vornehmlich in manuelle, teil- oder vollmechanisierte Verfahren oder deren Kombination unterteilen lassen. Massgebend für das gewählte Schweissverfahren sind Kriterien wie Werkstoff, Abmessung, Verwendungszweck und Wirtschaftlichkeit.

Rein manuelle Verfahren sind beispielsweise das fallende Metall-Lichtbogenschweissen mit Stabelektroden, das durch grosse Spaltüberbrückbarkeit und dickere Einzelschweisslagen gekennzeichnete Lichtbogenschweissen in Steignahttechnik und das Lichtbogenschweissen in Fallnahttechnik. Letzteres ermöglicht eine verhältnismässig hohe Schweissgeschwindigkeit, erfordert jedoch zur einwandfreien Durchführung der Schweissarbeiten ein genaues Ausrichten der Rohrenden mit geeigneten Zentriervorrichtungen, einen gleichmässigen Luftspalt, einen geringen Kantenversatz und die Vermeidung zu hoher Abkühlgeschwindigkeiten der Einzellagen. Ein voll ausgebildeter Fallnahtschweisser, geeignete Zentriervorrichtungen, gute Schweisselektroden und geeignete Schweissstromquellen, die linearen Gleichstrom erzeugen, sind zum wirtschaftlichen Einsatz der Fallnahttechnik unumgänglich.

Auch wenn in Niedriglohnländern, in denen der Faktor Lohn kaum eine Rolle spielt, Pipelines nach wie vor von Hand fallend mit oftmals technisch veralteten Schweissmaschinen geschweisst werden und somit die Qualität der Schweissnähte vor allem von der Qualifikation und Tagesform des Schweissers abhängig ist, wurden mittlerweile eine Vielzahl an automatischen oder halbautomatischen Schweissverfahren entwickelt. Ein sehr verbreitetes und relativ wirtschaftliches Verfahren im Pipelinebau ist die MAG-Orbitalschweisstechnik. Das Akronym MAG steht für das aus dem Stand der Technik bekannte Metallaktivgasschweissen, bei welchem ein Lichtbogen zwischen einer abschmelzenden und im Wesentlichen kontinuierlich zugeführten Drahtelektrode und dem Werkstück innerhalb eines Schutzgasmantels aus beispielsweise CO₂ oder Mischgas aus CO₂ inertem Gas, z.B. Argon, und eventuell auch O₂ abbrennt. Abhängig von der Verlegegeschwindigkeit der Pipeline, dem Rohrdurchmesser, der Wanddicke des Rohrs, der Beschaffenheit des Geländes, den Umgebungstemperaturen, der zur Verfügung stehenden Infrastruktur und der Qualifikation der Fachkräfte haben sich im Stand der Technik im Wesentlichen vier unterschiedliche Varianten etabliert, die im Folgenden dargestellt werden.

Bei der ersten Variante - der zwar kostengünstigsten aber auch langsamsten und daher vor allem für kürzere Pipelinebaustellen geeigneten Variante - werden die Rohre ohne Vorbehandlung mit einem Luftspalt von 1,5 mm bis 3 mm Abstand mittels einer pneumatischen Innenzentrierung zentriert und fixiert. Zunächst wird die Wurzel manuell von oben nach unten mit einer cellulosen bzw. basischen Elektrode oder mit einem MAG-Schweissgerät mit Metallpulverdraht von 1,0 mm geschweisst. Nach Fertigstellung der Wurzel wird ein Spannband um das Rohr nahe der Fuge arretiert, an dem mit zwei MAG-Orbitalschweissköpfen, die jeweils einen MAG-Brenner aufweisen, von unten nach oben mit einem Fülldraht alle Zwischenlagen und die Decklagen geschweisst werden. Für den Schweissprozess wird ein Schutzgas aus CO₂ und Argon eingesetzt. Der erste Schweisser beginnt in der Position 6 Uhr und schweisst pendelnd mit Verweilzeiten links und rechts alle Füll- und Decklagen bis zur Position 12 Uhr. Der zweite Schweisser beginnt zeitversetzt ebenfalls bei der Position 6 Uhr und schweisst bis zur Position 1 Uhr, um eine Überlappung der Schweissnaht zu erhalten. Diese Variante ist für das Verlegen von Fernwärmerohren im Tunnelbau, Wasserleitungen im Tunnelbau, aber auch für Gasspeicher grösserer Dimension, z.B. Durchmesser 2.500 mm, vor allem aber bei Wanddicken zwischen 15 mm und 30 mm einsetzbar. Die Abschmelzleistung beträgt 3,1 kg pro Stunde. Gegenüber dem Fallnahtschweissen mit Cellulose-Elektroden mit 1,7 kg pro Stunde ist diese Variante doppelt so schnell.

Die zweite etablierte Variante, die wesentlich schneller als die erste Variante ist, erfordert höhere Investitionskosten. Um nach dieser Variante schweissen zu können, benötigt man eine Fasing-Maschine mit einem Hydraulikaggregat zum Bearbeiten der Rohrenden. Alle Rohre sind auf der Baustelle mit einem Seitenbaum einzeln anzuheben, so dass sie in die Fasing-Maschine eingeführt werden können, um die Rohrenden entsprechend mit einer speziellen Schweissnahtvorbereitung auszustatten. Die Fugenform entspricht einer Tulpe mit einem Steg von ca. 2 mm mit einem geringen Öffnungswinkel, wobei wenig Zusatzwerkstoff wegen des geringen Nahtvolumens benötigt wird. Um das wurzelschweissen von aussen qualitativ zu beherrschen, ist es erforderlich, eine pneumatische Innenzentriervorrichtung mit Kupferbacken einzusetzen. Aufgabe der Kupferbacken ist es, das flüssige Schweissgut zu stützen, um eine hundertprozentige Wurzel zu erzielen, bei der beide Rohrinnenkanten miteinander verschweisst sind und ein Wurzeldurchhang von maximal 1 mm gewährleistet ist. Nachdem die Rohrenden bearbeitet sind, wird das Rohr mittels der pneumatischen Innenzentrierung mit Kupferbacken zentriert. Zuvor wird an einem der Rohrenden ein Spannband montiert, an welchem zwei MAG-Orbitalschweissköpfe geführt sind, welche die Wurzel von 12 Uhr nach 6 Uhr schweissen. Die Rohrenden werden ohne Luftspalt zentriert, so dass beginnend bei 12 Uhr der erste MAG-Orbitalschweisskopf den Steg mit einer hohen Stromleistung aufschmilzt und das flüssige Schweissgut von den Kupferbacken gestützt wird. Der zweite MAG-Orbitalschweisskopf startet ebenfalls bei 12 Uhr, wenn.der erste MAG-Orbitalschweisskopf die Position 2 Uhr erreicht hat. Um Fehler in der Wurzel zu vermeiden, findet eine derart konstante Stromversorgung für die Inverter oder Gleichrichter statt, dass sich die Schweissparameter während des Zuschaltens des zweiten MAG-Orbitalschweisskopfes nicht verändern. Dies ist insbesondere mittels eines hydraulischen, auf dem längs zur Pipeline bewegten Transportfahrzeug befindlichen Generatorantriebs, der im Millisekundenbereich reagiert, um die Stabilität des Lichtbogens zu erhalten, gewährleistet. Gegebenenfalls ist es möglich, für die unterschiedlichen Schweisspositionen - waagrecht, fallend und über Kopf - die Schweissstromquellen so zu programmieren, dass entsprechend der Position eines MAG-Orbitalschweisskopfes jeweils eine Stromanpassung sowie die Anpassung der Drahtvorschubgeschwindigkeit erfolgt. Die Anpassung erfolgt vollautomatisch, halbautomatisch oder auch manuell. Die beiden MAG-Orbitalschweissköpfe schweissen die Naht nach gleichen Kriterien von oben nach unten. Nach Fertigstellung der zweiten Lage werden die MAG-Orbitalschweissköpfe vom Spannband entfernt und zum nächsten Schweissstoss transportiert. Ein nachfolgendes MAG-Orbitalschweisskopfpaar schweisst nichtpendelnd mehrere Fülllagen ebenfalls von oben nach unten. Je nach Wanddicke des Rohres können bis zu 5 solcher Schweissstationen versetzt entlang der Pipeline eingesetzt werden, wobei insgesamt 10 MAG-Orbitalschweissköpfe teilweise gleichzeitig im Einsatz sind und benötigt werden. Es wird mit Massivdraht geschweisst und je nach Schweisslage mit einer unterschiedlichen Gaszusammensetzung gearbeitet. Es ist empfehlenswert, eine automatische Gasmischanlage auf den mobilen Transportfahrzeugen zu installieren oder Gas aus Flaschen zu verwenden, in denen das Gemisch fertig angeliefert wird. Die Abschmelzleistung dieser Variante beträgt üblicherweise bis zu 5,1 kg pro Stunde mit Massivdraht, was eine wesentliche Steigerung der Schweissgeschwindigkeit und der Tagesleistung darstellt. Die Schweissnahtqualität ist gut bis sehr gut. Eine maximale Reparaturquote von 3 bis 5% ist gegeben.

Für die dritte Variante wird ein Innen-MAG-Orbitalschweisskopf benötigt, um die Wurzel von innen zu schweissen. Vier MAG-Schweissbrenner schweissen - beginnend von Position 12 Uhr bis 6 Uhr - die Wurzel überlappend von der einen Hälfte des Rohres und vier MAG-Schweissbrenner von oben nach unten die andere Hälfte des Rohres. Das Schweissen der Wurzel an einem 1.200 mm Rohr dauert ca. 3 Minuten. Um diese hohe Schweissgeschwindigkeit zu erzielen, sind die Investitionskosten entsprechend sehr hoch. Das Schweissen der Füll- und Decklagen erfolgt wie bei der zweiten Variante mit Massivdraht von oben nach unten. Die Regelung findet in Abhängigkeit vom Qualifikationsgrad des Bedienungspersonals manuell, halbautomatisch oder im Falle programmierbarer Stromquellen automatisch statt. Die Abschmelzleistung bei diesem Verfahren liegt üblicherweise bei 5,9 kg pro Stunde, so dass dieses Verfahren im Vergleich zu den Vorangegangenen das schnellste, aber auch das kostenintensivste Orbitalschweissverfahren ist.

Eine vierte Variante sieht die Ausrüstung jeweils eines MAG-Orbitalschweisskopfes mit zwei um den Rohrumfang leicht versetzten MAG-Brennern und zwei oder vier Drähten vor. Die Schweissgeschwindigkeit erhöht sich etwa um 100%, wenn mit zwei MAG-Brennern geschweisst wird, oder etwa um 400%, wenn mit zwei MAG-Brennern und vier Drähten geschweisst wird. Diese Technologie ist vor allem für Rohre geeignet, deren Durchmesser grösser als 1.000 mm ist und deren Wanddicke mindestens 20 mm beträgt. Die Schweissnahtvorbereitung ist entsprechend anzugleichen. Insgesamt sind acht Schweissstromquellen, die beispielsweise auf dem Transportfahrzeug angeordnet sind, erforderlich, um zwei an einem Spannband wie oben beschrieben geführte MAG-Orbitalschweissköpfe mit jeweils vier Drähten bedienen zu können. Die Stromquellen kommunizieren miteinander und pulsen synchron. Dies ist z.B. mit einem speziellen Multi-Inverter möglich. Um derartige MAG-Orbitalschweissköpfe mit insgesamt vier Brennern einsetzen zu können, ist eine umfangreiche Schulung des Bedienpersonals erforderlich. Die jeweiligen Baustellenkriterien müssen berücksichtigt werden, um die gewünschte Tagesleistung mit diesem Verfahren zu erzielen. Die Investitionskosten sind erheblich, jedoch wird eine sehr hohe Abschmelzleistung und Schweissgeschwindigkeit erzielt.

Um bei allen vier Varianten des MAG-Orbitalschweissens optimale Schweissergebnisse zu erzielen, findet der Schweissprozess jeweils unter einem geeigneten Schweisserzelt statt. Das Schweisserzelt ist so konzipiert, dass während des Schweissprozesses keine Zugluft in das Zelt gelangen kann. Des Weiteren sind die Türen des Schweisserzelts derart gesichert, dass während der Schweissarbeiten kein Fremdzugang von aussen möglich ist. Im Falle extremer thermischer Bedingungen sind die Schweisserzelte zugluftfrei klimatisiert. Die Schweissnahtqualität hängt zum grossen Teil von der Ausführung des Schweisserzeltes ab. Alle oben beschriebenen vier Varianten des MAG-Orbitalschweissens sind technisch ausgereift, setzen aber voraus, dass alle Rahmenbedingungen eingehalten werden, um erstklassige Schweissnähte zu produzieren.

Das MAG-Orbitalschweissen ist durch hohe Reparaturquoten, Ausfallzeiten durch Witterungseinflüssen sowie Beeinträchtigungen der Schweissnahtqualität durch das Bedienungspersonal an seinen Grenzen angekommen. Das Bedienungspersonal der MAG-Orbitalschweissköpfe muss nicht nur auf dem Sektor Schweisstechnik, sondern auch auf dem elektronischen Sektor hochqualifiziert sein. Schweissparameter, die den Schweissprozess in den unterschiedlichen Schweisspositionen vollautomatisch beeinflussen, haben den Nachteil, dass Veränderungen von aussen - insbesondere Spritzer, die unkontrolliert beim Schweissen entstehen können, oder auch Einflüsse aus der Atmosphäre - voraussetzen, dass der Schweisser sofort in den automatisierten Prozess eingreift und den Schweissprozess manipuliert, um die Fehler zu minimieren. Das Schweissen der Wurzel mit Innen-MAG-Orbitalschweissköpfen ist zwar sehr schnell, aber auch sehr kostenintensiv. Ausserdem ist die Wurzellage oft mit sehr vielen Schweissfehlern behaftet. Am Beginn einer Wurzel ist es möglich, dass sich beim Ansetzen Poren bilden, die sich beim Überschweissen mit einem nachfolgenden Brenner bis in die obere Nahtschicht ausbilden. Diese Poren müssen nach dem Schweissen mechanisch beseitigt werden. Es ist also erforderlich, dass ein Schweisser von innen und mit einem Handschweissgerät die Wurzel nachschweisst. Erst dann können weitere Schweissprozesse von aussen erfolgen. Die hohen Investitionskosten und das viele erforderliche gut ausgebildete Personal haben diesem Verfahren daher nicht zum Durchbruch verholfen. Durch den Einsatz von zwei oder vier Drähten an einem Schweisskopf werden diese Probleme sogar noch umfangreicher.

Da zur Fertigstellung einer Schweissnaht neben der Wurzel und der Decklage eine Vielzahl an Fülllagen geschweisst werden müssen, die zum Teil den Einsatz unterschiedlicher MAG-Orbitalschweissköpfe erfordern, werden zur Erreichung einer hohen Verlegegeschwindigkeit der Pipeline in der Regel mehrere, teilweise über fünf Schweissstationen eingesetzt, mittels welcher jeweils eine Schweissnaht oder mehrere Schweissnähte erzeugt werden. Da somit gleichzeitig an mehreren Rohrverbindungen gearbeitet wird, müssen mehrere komplett ausgestattete Schweissstationen bereitgestellt werden, die jeweils nicht nur mehrere MAG-Orbitalschweissköpfe, sondern auch jeweils eine Abschirmung insbesondere in Form eines Schweisserzelts, ein die jeweilige Schweissstromquelle, die Schutzgasflaschen, den Generator, gegebenenfalls den Schweissdraht und weitere Versorgungseinrichtungen transportierendes Transportfahrzeug und mehrere Rohrkräne erfordern. Dies führt nicht nur zu erheblichen Investitionskosten, sondern hat auch einen grossen Wartungsaufwand und hohe Personalkosten zur Folge, da jede Schweissstation von entsprechend qualifiziertem Personal zu bedienen ist.

Aufgrund dieser Probleme im Stand der Technik des mobilen MAG-Orbitalschweissens von Pipelines wird weltweit seit längerem nach alternativen Fügeverfahren für den Pipelinebau geforscht.

Ein im stationären Einsatz bewährtes Schweissverfahren ist das Laserstrahlschweissen. Beim Laserstrahlschweissen kommen als Laserstrahlquelle momentan Hochleisbungs-CO₂-Gaslaser, -Nd:YAG-Festkörperlaser, -Scheibenlaser und -Diodenlaser zum Einsatz. Als Hochleistungslaser sei eine Laserstrahlquelle mit einer Strahlleistung von mindestens 1 kW zu verstehen.

CO₂-Laser emittieren Laserlicht mit einer Wellenlänge von 10,6 µm und besitzen in der Materialbearbeitung Strahlleistungen von wenigen hundert Watt bis über 40 kW bei einem Wirkungsgrad von cirka 10%. Die Strahlführung hat bei derartigen CO₂-Laser über relativ aufwendige Spiegeloptiken zu erfolgen, da eine Strahlführung über einen flexiblen Lichtwellenleiter aufgrund der Wellenlänge des emittierten Laserlichts nicht möglich ist.

Das von einem Nd:YAG-Laser emittierte Laserlicht hat eine Wellenlänge von 1,064 µm, wobei industriell verfügbare, lampengepumpte Systeme für die Materialbearbeitung eine Strahlleistung von etwa 10 W bis über 6 kW im Dauerstrichbetrieb besitzen. Durch die Verwendung von Dioden-Arrays zur Anregung anstelle von Bogenlampen ist bei allerdings erheblich höheren Investitionskosten eine Erhöhung des Wirkungsgrades von 3% für ein lampengepumptes System auf bis zu ca. 10% möglich. Ein von einem Nd:YAG-Laser erzeugter Strahl kann im Gegensatz zum CO₂-Laserstrah über Lichtwellenleiter, insbesondere ein Glasfaserkabel, geführt werden, was eine erheblich flexiblere Aufstellung der Strahlquelle und Handhabung des Nd:YAG-Laserstrahls ermöglicht.

Eine neuere Entwicklung im Bereich der Festkörperlaser ist der Scheibenlaser. Das Licht dieses Lasers kann wie das des Nd:YAG-Lasers über Fasern geführt werden. Vorteilhaft ist bei diesem Laser insbesondere der hohe Wirkungsgrad im Bereich um 20%. Seine Strahlleistung ist jedoch derzeit auf bis zu 4 kW beschränkt.

Die Wellenlänge von Diodenlasern liegt je nach Dotierung des verwendeten Halbleitermaterials zwischen 0,78 und 0,94 µm, wobei bei einem Wirkungsgrad von 35 bis 50% derzeit Strahlleistungen bis 4 kW fasergekoppelt oder 6 kW direktstrahlend industriell verfügbar sind.

Diese vier beim Laserstrahlschweissen eingesetzten Laserstrahlquellen konnten jedoch bisher nicht beim mobilen Orbitalschweissen von Rohen, insbesondere Pipelines, erfolgreich zur Anwendung kommen.

Da der von einem CO₂-Laser emittierte Strahl nur mittels Spiegel umgelenkt werden kann und die Strahlführung somit ausserordentlich schwierig ist, kommen CO₂-Laser bisher in der Praxis nur im stationären Bereich oder im Off-Shore-Bereich auf Schiffen zum Einsatz, wobei entweder die zu fügenden Rohre bei stillstehender Laserstrahlquelle relativ zum unbewegten Laserstrahl gedreht werden oder die gesamte Laserstrahlquelle mittels einer stabilen Vorrichtung um das aufrecht stehende unbewegte Rohr geschwenkt wird. Derartige Vorrichtungen zeigt beispielsweise die US 4,591,294, in welcher eine Orbitalschweissvorrichtung mit zwei CO₂-Lasern beschrieben wird, die auf einer drehbaren Plattform angeordnet sind und derart jeweils um 180° um einen senkrecht stehenden, von einem Schiff in das Meer herabzulassenden Pipelineabschnitt geschwenkt werden können, dass eine Umfangsschweissnaht herstellbar ist. Bei der horizontalen Landverlegung von langen Rohrleitungen, insbesondere Pipelines, ist das Drehen der Rohrleitung bei unbewegtem Laserstrahl ausgeschlossen. Ein Schwenken des gesamten CO₂-Lasers um ein horizontal liegendes Rohr ist aufgrund des hohen Gewichts und der Baugrösse eines Hochleistungs-CO₂-Lasers mittels mobiler Vorrichtungen mit der erforderlichen Präzision unter Feldbedingungen nicht möglich. Ein Führen des Laserstrahls rings um ein feststehendes Rohr, bevorzugt um über 180°, so dass der Strahl stets im Wesentlichen senkrecht auf die Rohraussenfläche auftrifft, ist höchst kompliziert, da mehrgelenkige Spiegelsysteme zum Einsatz kommen müssen. Ein Spiegelsystem, mittels welchem ein parallel zur Rohrachse ausserhalb des Rohrs geführter Laserstrahl über fünf Spiegel, die in einem mehrschenkligen und mehrfach verstellbarem Stahlführungsrohrsystem angeordnet sind, rings um eine Umfangsfuge zweier Rohrenden geführt werden kann, ist aus der russischen Offenlegungsschrift RU 2 229 367 C2 bekannt. Die US 4,533,814 zeigt ein ähnliches System, bei welchem ein senkrecht auf die Rohrachse weisender Laserstrahl über ein Stahlführungsrohrsystem, das drei Gelenke und mehrere Spiegel umfasst, um ein Rohr relativ kleinen Durchmessers geführt werden kann. Ein weiteres Spiegelsystem wird in der US 4,429,211 beschrieben, bei welchem ein Laserstrahl über verstellbare Spiegel zum Teil ungeschirmt zu einem eine Umfangsfuge orbital umlaufenden Arbeitskopf gelenkt wird, der diesen Strahl wiederum senkrecht auf die Umfangsfuge richtet. Den bekannten Spiegelsystemen ist gemein, dass sie aufgrund des grossen Platzbedarfs, des hohen Gewichts, der hohen Investitionskosten und der hohen Empfindlichkeit in Bezug auf Verschmutzung, Dejustierung oder Beschädigung der Spiegel für den mobilen Einsatz unter Feldbedingungen ungeeignet sind. Ein Innenumfangsschweissen mittels eines zur Rohrachse koaxialen CO₂-Laserstrahl ist zwar möglich, jedoch lassen sich durch das Innenumfangsschweissen von Rohrleitungen ohne zusätzliches Aussenumfangsschweissen bisher nur unbefriedigende Resultate erzielen. Ein weiteres Problem des CO₂-Lasers ist dessen schlechter Wirkungsgrad und der hiermit verbundene hohe Energie- und Kühlungsbedarf. Da im Feldeinsatz Strom in der Regel von mobilen Generatoren erzeugt werden muss, ist die ausreichende Stromversorgung eines Hochleistungs-CO₂-Laser problematisch. Weiters müssen wegen der hohen Wärmeentwicklung grosse Kühlsysteme eingesetzt werden, die einen mobilen Einsatz eines CO₂-Lasers zusätzlich erschweren. Aufgrund der relativ hohen Erschütterungsempfindlichkeit eines CO₂-Lasers ist ein mobiler kaum möglich.

Ein Nd:YAG-Laser wäre aufgrund der Tauglichkeit des emittierten Laserstahls zur Strahlführung über einen flexiblen Lichtwellenleiter für die Führung des Strahls um ein Rohr grossen Durchmessers geeignet, jedoch erweist sich diese Laserquelle, wie auch der CO₂-Laser, als ungeeignet für den mobilen Feldeinsatz. Aufgrund des verglichen mit anderen Industrielasern schlechten Wirkungsgrads einer Nd:YAG-Lasers stellen die Stromversorgung und der Platzbedarf des Lasers und dessen Zusatzkomponenten, insbesondere der Kühler, ein bisher nicht gelöstes Problem für den Einsatz beim mobilen Orbitalschweissen von Pipelines dar. Die Erschütterungsempfindlichkeit eines Nd:YAG-Laser ist ebenfalls relativ hoch. Ausserdem können bisher mit dem Nd:YAG-Laser aufgrund der im Vergleich zum CO₂-Laser geringeren Laserstrahlleistung auch im stationären Einsatz keine vollends zufrieden stellenden Schweissergebnisse erzielt werden, da die maximal erreichbare Schweissgeschwindigkeit beim Schweissen von grossen Rohren, insbesondere für eine Pipeline, zu gering ist oder nicht einlagig geschweisst werden kann.

Die Strahlleistung des Scheibenlasers ist derzeit auf maximal 4 kW beschränkt, was angesichts der Stahleigenschaften eines Scheibenlasers für das Orbitalschweissen von dickwandigen Rohren als nicht ausreichend anzusehen ist. Trotz seines hohen Wirkungsgrads im Bereich um 20% und des damit verbundenen relativ geringen Leistungsbedarfs ist der Scheibenlaser aufgrund seines schwierig zu justierenden Aufbaus und seiner extrem hohen Erschütterungsempfindlichkeit momentan keinesfalls als mobile Strahlquelle, die unter Feldbedingungen zwangsläufig Erschütterungen ausgesetzt ist, geeignet.

Im Gegensatz zu Hochleistungs-CO₂-Lasern, -Nd:YAG-Lasern und -Scheibenlasern, die hinsichtlich Energie- und Raumbedarf sowie konstruktiver Auslegung und Gewicht nur mit sehr grossen Einschränkungen überhaupt als mobile Systeme betrieben werden können, stellt der Diodenlaser eine relativ mobile, kompakte und leichte Laserstrahlquellen mit gutem Wirkungsgrad dar. Jedoch ermöglicht der Diodenlaser aufgrund seiner prinzipbedingten geringeren Strahlintensität und Strahlleistung in der Regel unter Normalbedingungen kein Tiefschweissen, so dass das Schweissen dickwandigerer Rohre nur in Mehrlagentechnik möglich wäre.

Die US 5,796,068 und US 5,796,069 beschreiben eine Laseraussenumfangsschweissvorrichtung für den Pipelinebau. Die Vorrichtung umfasst wenigstens eine aussen an einem Rohr der Pipeline befestigte ringförmige Führungsschiene, einen auf nämlicher geführten und rings um das Rohr bewegbaren Schweisswagen, eine auf dem Schweisswagen montierte Laserstrahlquelle zum Erzeugen eines Laserstrahls, der gegebenenfalls über Umlenkmittel auf die von den zu verbindenden, stumpf gegeneinander stossenden Rohrenden gebildete Fuge richtbar ist, und eine ebenfalls auf dem Schweisswagen montierte Vorschubeinheit zum orbitalen Bewegen des Schweisswagens um das Rohr, so dass der Laserstrahl entlang der Fuge der gegeneinander stossenden Rohrende zum Fügen der selbigen mittels einer Aussenumfangsschweissnaht geführt wird. Da die Laserstrahlquelle direkt auf dem Schweissfahrzeug angeordnet ist und um das gesamte Rohr bewegt werden muss, ergeben sich erhebliche Einschränkungen bei der Auswahl einer hierfür geeigneten Strahlquelle. Ein bezüglich Baugrösse und Gewicht geeigneter Festkörper- oder Gaslaser weist eine viel zu geringe Strahlleistung auf, um eine Schweissgeschwindigkeit, die mindestens derjenigen beim Lichtbogenschweissen entspricht, zu erreichen. Ein Diodenlaser wäre zwar unter Umständen bezüglich seiner Baugrösse zur direkten Montage auf den Transportwagen geeignet, jedoch ermöglicht er aufgrund seiner prinzipbedingt geringe Strahlintensität kein Tiefschweissen dickwandiger Rohre ohne Anwendung von Mehrlagentechnik.

Ausserdem wird in der US 5,796,068 und in der US 5,796,069 eine kombinierte Laserinnenumfangsschweiss- und Innenzentriervorrichtung beschrieben. Die Vorrichtung ist als ein Fahrzeug ausgebildet, das mittels eines Antriebs innerhalb des Rohrs entlang der Rohrachse bewegbar ist und sich somit im Bereich der von den zu verbindenden, stumpf gegeneinander stossenden Rohrenden gebildete Fuge positionieren lässt. Mit Hilfe einer integrierten Innenzentriereinheit, die zwei jeweils auf die Innenfläche eines Rohrs radial wirkende pneumatische Spannvorrichtungen aufweist, sind die beiden Rohre in bekannter Weise exakt zueinander ausrichtbar. In einem darauf folgenden Schritt wird mindestens ein von einer auf dem Rohrfahrzeug montierten Laserstrahlquelle emittierter Laserstrahl über Lichtleitmittel entlang der Fuge zum Fügen der beiden Rohrenden mittels einer Innenumfangsschweissnaht geführt. Weiters wird ein Verfahren beschrieben, bei welchem zuerst eine Schweisslage von innen mit Lichtbogen und im Anschluss eine Schweisslage von aussen mit Laser geschweisst wird.

In der WO 92/03249 wird eine Vorrichtung zum Laserschweissen eines Rohrs entlang seinem Innenumfang mit einer in das Rohr einführbaren Sonde offenbart. Innerhalb der Sonde sind Mittel angeordnet, mit denen ein Teil eines sich in ihrem Inneren ausbreitenden Schutzgasstroms vor Erreichen einer Austrittsöffnung für ein fokussiertes und umgelenktes, insbesondere von einem beabstandeten Nd:YAG-Laser mittels eines Lichtwellenleiters zugeführten Laserstrahlenbündel abgezweigt und mit einer zur Austrittsöffnung hin gerichteten Strömungskomponente zur Aussenoberfläche des Sonde geführt wird. Dadurch wird ein Niederschlag von Schweissgut im Bereich der Austrittsöffnung und im Inneren der Sonde verringert.

In der US 5,601,735 wird eine Laserschweissvorrichtung zur Herstellung eines länglichen, rohrförmigen und gasdichten, insbesondere mit dem Isolationsgas SF₆ zu befüllenden Erdungszylindergehäuses aus einer Vielzahl von kurzen, über eine Aussenumfangsschweissnaht miteinander verbundenen Zylindersegmenten für eine elektrische Komponente, beispielsweise einen Leistungs- oder Lasttrennschalter, vorgestellt. Die Laserschweissvorrichtung umfasst einen Ringrahmen, der mittels zweier, die beiden zu verbindenden. Zylindersegmente jeweils nahe den Zylinderenden fest umschliessenden Spannbänder rings um die Umfangsfuge angeordnet wird. Da der Abstand der beiden über den Ringrahmen miteinander verbundenen Spannbänder über eine Vielzahl an Längsstellschrauben einstellbar ist und beide Spannbänder relativ zu den Zylindersegmenten über mehrere, entlang dem Umfang verteilte Radialspannschrauben axial ausrichtbar sind, ist es möglich, die beiden Zylindersegmente zueinander auszurichten. Innerhalb des Ringrahmens befindet sich eine Ringschiene, entlang welcher ein Laserschweisswerkzeug geführt wird, das über einen am Ringrahmen montierten, in einen am Laserschweisswerkzeug angeordneten Zahnkranz eingreifenden Elektromotor rings um die Umfangsfuge bewegbar ist. Das Laserschweisswerkzeug umfasst eine Fokussieroptik zum Fokussieren eines Laserstrahls auf die Umfangsfuge, Detektoren zum Erfassen der Lage der Umfangsfuge und zwei Antriebe zum Feinausrichten der Fokussieroptik auf die Umfangsfuge in radialer und axialer Richtung. Der Laserstrahl wird mittels einer in der Nähe des Ringrahmens platzierten Laserstrahlquelle erzeugt und über ein Glasfaserkabel zur Fokussieroptik geleitet. Das Glasfaserkabel ist innerhalb des Ringrahmens über eine Spiralschiene derart um die beiden Rohre gewunden, dass beim Bewegen des Laserschweißwerkzeugs um den gesamten Rohrumfang eine Überdehnung oder sonstige Beschädigung des Glasfaserkabels verhindert werden soll. Als mögliche Laserstrahlquelle wird trotz der verwendeten Glasfaser ein CO₂-Laser angegeben. Die in der US 5,601,735 beschriebene Schweißvorrichtung ist für das im stationären Einsatz stattfindende Fügen von relativ kurzen zylindrischen Segmenten kleinen Durchmessers, geringer Wanddicke und relativ leichten Gewichts, wie dies bei gattungsgemäβen Erdungsgehäusen für Leistungs- oder Lasttrennschalter der Fall ist, ausgelegt. Da die Fertigung derartiger Produkte stets stationär erfolgt, stellt sich die Frage eines mobilen Betriebs der offenbarten Vorrichtung gattungsgemäß nicht, weshalb entsprechende Maßnahmen nicht beschrieben werden. Der Einsatz eines derartigen Schweißverfahrens für das Schweißen von langen Rohren große Durchmessers bis über 1500 mm und Wanddicken bis etwa 25 mm, beispielsweise Pipelines, mit hoher Schweißgeschwindigkeit ist mittels der beschriebenen Schweißvorrichtung, die lediglich für geringe Laserleistungen ausgelegt ist, nicht möglich. Die Führung des Laserstrahls einer CO₂-Laserquelle mittels eines Glasfaserkabels, wie in der US 5,601,735 beschrieben, ist bei Einsatz einer Hochleistungs-CO₂-Laserquelle mit über 1 kW Strahlleistung nicht möglich.

Durch FR 2 812 227 A1 ist eine Orbitalschweißvorrichtung bekannt, bei der auf einem Orbitalwagen ein Schweißkopf außen auf dem Rohrumfang umlaufend verfahrbar ist, um eine umlaufende Schweißnaht mit einem Laserschweißkopf herzustellen. Über Verbindungsleitungen ist der Schweißkopf mit einem neben der Rohrleitung verfahrbaren Fahrzeug verbunden, auf dem eine Laserstrahlquelle und eine Stromversorgung angeordnet sind. Der Laserstrahl wird über optische Fasern innerhalb der Verbindungsleitung auf den Schweißkopf geleitet. Für die Verschweißung mit einer U-förmigen Schweißnaht wird die Laserverschweißung für die aneinander anstoßenden Flächen der Rohrenden unterhalb des Bodens des U ausgeführt. Das Ausfüllen der U-förmigen Schweißfuge erfolgt anschließend mit einem herkömmlichen Schweißverfahren. Für das Ausrichten des Lasers auf die Schweißebene können optische Sensoren, beispielsweise in Form einer Kamera, vorgesehen sein. Als bevorzugte Laserstrahlungsquelle wird ein Festkörper-Nd:YAG-Laser auch in Form eines Scheibenlasers angesehen.

Aus einem Kongressvortrag auf der Richard Dolby Conference "Metals Joining Technology - Where Next?" vom 17/18. November 2003 ist es ebenfalls bekannt, dass auch für Tiefwasser-Pipeline Nd:YAG-Laser einsetzbar sind, deren Laserstrahlung mit optischen Faserleitungen transportierbar ist. Allerdings wird auch bezüglich etwaiger Hybrid-Verfahren, die ein Laserschweißen mit dem herkömmlichen Lichtbogenschweißen kombinieren, auf absehbare Zeit nicht als vorteilhaft gegenüber dem herkömmlichen Schutzgas-Schweißverfahren angesehen.

In dem Aufsatz "Fiber Lasers grow in power" in Laser Focus World 2002, Seiten 83-87 wird darauf hingewiesen, dass die bis dahin nur eine geringe Ausgangsleistung aufweisenden Faserlaser künftig auch als Hochleistungs-Laser hergestellt werden könnten, um für Hochleistungs-Metallschweißanwendungen in der Autoindustrie verwendet zu werden. Es wird angenommen, dass industrielle Faserlaser mit Ausgangsleistungen von 4 kW und 10 kW bald zur Verfügung stünden.

Der Erfindung liegt daher die Aufgabe zugrunde, eine Vorrichtung zum Orbitalschweißen von Rohrleitungen mittels einer Umfangsschweißnaht, die nur eine oder möglichst wenige Lagen aufweist, insbesondere zum Orbitalschweißen von auf Land horizontal verlegten Pipelines im mobilen Einsatz unter Feldbedingungen, zur Verfügung zu stellen, mit der höhere Schweißgeschwindigkeiten als beim MAG-Orbitalschweißen, eine erhöhte Prozesssicherheit und eine hohe Schweissnahtqualität erzielt werden können.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die erfindungsgemässe Orbitalschweissvorrichtung ist für den mobilen Einsatz zum Verbinden eines ersten Rohrendes und eines zweiten Rohrendes entlang einer Umfangsfuge mittels mindestens einer Schweissnaht, insbesondere zur Herstellung einer auf Land horizontal zu verlegenden Pipeline, jedoch auch für den stationären Einsatz oder den Offshore-Einsatz auf See bei nichthorizontaler Rohrausrichtung geeignet. Mittels der erfindungsgemässen Orbitalschweissvorrichtung ist es möglich, Rohre, die aus einem schmelzschweissbaren Werkstoff, insbesondere einem metallischen Werkstoff, bevorzugt einem Stahlwerkstoff, z.B. X70, X80, X90, X100 oder hochlegiertem, nicht rostendem Stahl bestehen und einen Durchmesser von 50 mm bis über 4.000 mm und eine Wanddicke von 2,5 mm bis über 25 mm aufweisen, innerhalb kurzer Zeit mit nur einem Orbitalumlauf zu verbinden. Auch wenn die Anwendung der Vorrichtung für kleinere Rohre möglich ist, besitzen die zu verbindenden Rohrsegmente in den bevorzugten Anwendungen einen Durchmesser von über 500 mm, insbesondere über 800 mm, vor allem über 1.000 mm, eine Wanddicke von über 5 mm, vor allem über 10 mm, und eine Länge, die wesentlich grösser ist als der Durchmesser des Rohrs. Aufgrund der Eignung zum mobilen und autarken Einsatz kann die erfindungsgemässe Vorrichtung auch zur Herstellung von horizontal auf Land zu verlegenden Pipelines in einer Umgebung, in der nur eine schlechte oder keine Infrastruktur in Form einer festen Strom-, Wasser- oder Gasversorgung zur Verfügung steht, verwendet werden.

Die Orbitalschweissvorrichtung umfasst einen Führungsring, der zu dem Rohrende eines ersten Rohrs, im Folgenden als das erste Rohrende bezeichnet, und der Umfangsfuge ausrichtbar ist. Die Umfangsfuge sei als der Spalt oder Nullspalt zwischen den Stirnseiten des ersten Rohrendes und des Rohrendes eines zweiten Rohrs gleichen Querschnitts, im Folgenden das zweite Rohrende genannt, oder als der Rohrstoss definiert, wobei das erste Rohr und das zweite Rohr derart zueinander ausgerichtet sind, dass die Umfangsfuge einen im Wesentlichen konstanten Spaltabstand von höchstens 1 mm, bevorzugt unter 0,3 mm, besonders bevorzugt technischer Nullspalt, aufweist und beide Rohre ohne wesentlichen Versatz zueinander zentriert sind. Die beiden Rohre haben bevorzugt einen kreisförmigen, alternativ jedoch einen ellipsoiden oder sonstigen Querschnitt und sind insbesondere gerade, gebogen oder abgewinkelt ausgeführt. Vorrichtungen zum von der Innen- und/oder Aussenseite erfolgenden Zentrieren von Rohren und zum Einstellen eines definierten Spaltabstands der Umfangsfuge sind aus dem Stand der Technik in unterschiedlichen Ausführungsformen bekannt. Die Rohrenden sind insbesondere unter Zuhilfenahme einer bekannten Fasing-Vorrichtung derart bearbeitet, dass die Umfangsfuge die Form einer 1-Naht, einer Y-Naht, V-Naht oder einer Tulpennaht hat. Alternativ sind die Kanten lasergeschnitten. Der Führungsring ist bevorzugt parallel zur Umfangsfuge mit konstantem Abstand zur Aussenfläche oder Innenfläche des ersten Rohrendes ausgerichtet. Das Ausrichten erfolgt beispielsweise über eine Vielzahl entlang des Führungsringumfangs angeordneter Spannschrauben, mittels derer der Abstand des Führungsrings vom der Rohroberfläche exakt einstellbar ist.

Der Führungsring dient zum Führen eines auf selbigem angeordneten Orbitalwagens, der orbital entweder entlang dem gesamten Aussen- oder Innenumfang des ersten Rohrendes oder zumindest entlang einem Teilabschnitt des Umfangs verschiebbar geführt ist. Der Orbitalwagen kann motorisch über eine Vorschubeinrichtung entlang dem Führungsring bewegt werden.

Auf dem Orbitalwagen ist ein Laserschweisskopf zur Führung und Formung eines Laserstrahls angeordnet. Der Laserschweisskopf ist derart auf die Umfangsfuge ausrichtbar, das mittels eines von dem Laserschweisskopf auf die Umfangsfuge oder auf einen in unmittelbarer Nähe zur Umfangsfuge befindlichen Punkt fokussierten Laserstrahls, gegebenenfalls unter Zufuhr von inerten oder aktiven Prozessgasen oder Gemischen aus diesen, der Werkstoff der beiden Rohrenden innerhalb der im Folgenden als Laserschweisszone bezeichneten thermischen Einflusszone des Laserstahls aufschmelzbar ist und durch Verschieben des Orbitalwagens entlang dem Führungsring, gegebenenfalls unter Zufuhr eines Zusatzwerkstoffs in Form eines Drahts, eine Schweissnaht entlang der Umfangsfuge herstellbar ist. Gegebenenfalls sind Mittel zur Badstützung oder Formierung vorgesehen, insbesondere Kupferbacken auf der Gegenseite oder eine Zufuhrvorrichtung zur wurzelseitigen Zufuhr von Formiergas.

Die Erzeugung des Laserstrahls erfolgt erfindungsgemäss über wenigstens eine mobile Hochleistungs-Faserlaserstrahlquelle, die von dem Laserschweisskopf beabstandet - insbesondere auf einem längs zur Rohrachse ausserhalb des Rohrs beweglichen Transportfahrzeug schwingungsgedämpft - angeordnet ist. Der von dem Faserlaser erzeugte Laserstrahl wird über einen Lichtwellenleiter, bevorzugt ein flexibles Glasfaserkabel, von der Hochleistungs-Faserlaserstrahlquelle zum Laserschweisskopf geführt. Es ist möglich, einen Lichtwellenleiter mit einer Länge von 30 m bis über 200 m einzusetzen, so dass das Transportfahrzeug mit der Hochleistungs-Faserlaserstrahlquelle weit beabstandet vom Laserschweisskopf positioniert werden kann.

Als Hochleistungs-Faserlaserstrahlquelle im Rahmen der Erfindung sei eine Festkörper-Laserstrahlquelle mit einer vom Einsatzgebiet abhängigen Strahlleistung von über 1 kW, insbesondere über 3 kW, bevorzugt über 5 kW, besonders bevorzugt über 7 kW zu verstehen, deren laseraktives Medium von einer Faser gebildet wird. Die insbesondere aus Yttrium-Aluminium-Granat bestehende Faser ist in der Regel mit Ytterbium oder anderen seltenen Erden dotiert. Die Enden und/oder die Mantelfläche der Glasfaser werden beispielsweise mittels Dioden optisch gepumpt. Die Wellenlänge einer typischen Hochleistungs-Faserlaserstrahlquelle liegt etwa bei 1,07 µm, wobei bei einem Wirkungsgrad von mehr als 20% Strahlleistungen von theoretisch bis über 100 kW verfügbar sind. Somit ist der Wirkungsgrad einer Hochleistungs-Faserlaserstrahlquelle wesentlich höher als der eines Nd:YAG-Lasers oder eines CO₂-Lasers. Die maximal erreichbare Strahlleistung liegt derzeit wesentlich höher als die des Nd:YAG-Lasers oder des Diodenlasers. Die Strahlintensität übertrifft die des Diodenlasers, so dass ein Tiefschweissen möglich ist. Im Vergleich zum CO₂-Laser, Nd:YAG-Laser und Scheibenlaser ist eine Hochleistungs-Faserlaserstrahlquelle relativ erschütterungsunempfindlich. Ein von einer Hochleistungs-Faserlaserstrahlquelle erzeugter Laserstrahl kann im Gegensatz zum CO₂-Laser über ein flexibles Glasfaserkabel über Distanzen bis über 200 Meter geleitet werden. Die Hochleistungs-Faserlaserstrahlquelle ermöglicht sowohl das Erzeugen kontinuierlicher Laserstrahlung im sogenannten cw-Betrieb, als auch die Erzeugung gepulster Laserstrahlung mit Pulsfrequenzen bis über 20 kHz und beliebigen Pulsformen. Insbesondere aufgrund des im Vergleich zum Nd:YAG-Laser ausgezeichneten Wirkungsgrads, der eine relativ geringe Generatorenleistung und ein relativ kleines Kühlsystem erfordert, der hohen verfügbaren Strahlleistung und der hervorragenden Strahlqualität, die im Vergleich zum Diodenlaser ein Tiefschweißen ermöglicht, der Tauglichkeit zur Lichtwellenleiterstrahlführung, der geringen Erschütterungsempfindlichkeit und der im Vergleich zum Nd:YAG-Laser und CO₂ Laser geringen Baugröße einer Hochleistungs-Faserlaserstrahlquelle ist ein mobiler und autarker Einsatz auf einem Transportfahrzeug möglich.

Erfindungsgemäß ist eine Prozessparametersteuerung realisiert, bei der der Orbitallagererfassungssensor über einen Steuerrechner verbunden ist, sodass Schweißparameter in Abhängigkeit von der orbitalen Lage des Orbitalwagens automatisch anpassbar sind. Schweißparameter sind dabei Laserstrahlungsparameter und Vorschubgeschwindigkeit des Orbitalwagens, bei einer Kombination mit einer Lichtbogenschweißeinrichtung auch MSG-Lichtbogenparameter. Somit ist es möglich, beispielsweise bei Fallnaht oder Steignaht mit unterschiedlichen Schweißparametern zu schweißen.

Mittels der erfindungsgemäßen Orbitalschweißvorrichtung ist es realisierbar, wie Versuche gezeigt haben, bei einer momentan kommerziell verfügbaren Strahlleistung von 10 kW, einem Strahlparameterprodukt von 12 mm*mrad und einem Strahldurchmesser im Fokusbereich von ca. 0,3 mm Rohre, die eine Wanddicke von 12 mm oder 16 mm haben, aus X70 Stahl gefertigt sind und eine V-Naht-förmige und durch Laserstrahlschneiden vorbereitete Umfangsfuge mit einem sehr kleinen Öffnungswinkel von nur etwa 1° aufweisen, mit einer Schweißgeschwindigkeit von 2,2 bzw. 1,2 Metern pro Minute zu fügen, wobei die hierbei erzeugte Schweißnaht anforderungsentsprechender Qualität nur eine einzige Schweißlage aufweist. Somit sind Schweißgeschwindigkeiten von unter 3 Minuten zum Fügen zweier typischer Pipelinesegmente mit Nenndurchmesser 1.000 mm im mobilen Einsatz unter Feldbedingungen möglich.

Ein wesentlicher Vorteil der Erfindung besteht darin, dass mittels nur eines Orbitalumlaufs und bevorzugt eines einzigen Schweißvorgangs binnen kurzer Zeit das Fügen zweier Rohrenden möglich ist. Die beim horizontalen Verlegen von Pipelines unter Feldbedingungen beim MAG-Orbitalschweißen, bisher aus wirtschaftlichen Gründen bestehende Notwendigkeit des Einsatzes einer Vielzahl entlang der Pipeline an mehreren Fügestellen arbeitenden, unterschiedliche Schweisslagen schweissenden Schweissstationen entfällt, da mittels einer einzigen Schweissstation das vollständige Verbinden zweier Rohrsegmente möglich ist. Der Transport einer Vielzahl von Schweissstationen und die damit verbundenen Kosten entfallen. Der Personalaufwand ist wesentlich geringer als bei den bisher bekannten Verfahren. Die Schweissnahtqualität und die Prozesssicherheit übertrifft die der bisher bekannten MAG-Orbitalschweissvorrichtungen. Selbstverständlich ist es möglich, zur weiteren Erhöhung der Fertigungsgeschwindigkeit mehrere Laserschweissköpfe, die an einer Umfangsfuge arbeiten, oder in unterschiedlichen Schweissstationen zum Einsatz kommen, zu verwenden. Die Verwendung einer einzigen Hochleistungs-Faserlaserstrahlquelle für mehrere Laserschweissköpfe oder mehrerer Hochleistungs-Faserlaserstrahlquellen für einen Laserschweisskopf ist möglich. Ebenfalls ist es realisierbar, die erfindungsgemässe Orbitalschweissvorrichtung mit Elementen bereits bekannter Orbitalschweissvorrichtungen, z.B. einer bereits aus dem Stand der Technik bekannte MSG-Orbitalschweissvorrichtungen, zu kombinieren.

In einer Weiterbildung der Erfindung ist auf dem Orbitalwagen mittel- oder unmittelbar ein insbesondere relativ zum Orbitalwagen motorisch ausrichtbarer MSG-Lichtbogenschweisskopf angeordnet. Unter einem MSG-Lichtbogenschweisskopf ist allgemein ein Metallschutzgas-Schweisskopf zu verstehen, bei welchem ein Lichtbogen zwischen einer Drahtelektrode, die über einen Drahtvorschub kontinuierlich zugeführt wird, und dem Werkstück brennt und von einem Schutzgasmantel umhüllt wird. Der MSG-Lichtbogenschweisskopf ist auf dem Orbitalwagen entweder unmittelbar oder mittelbar, beispielsweise auf dem Laserschweisskopf, montiert und insbesondere relativ zum Orbitalwagen in mehreren Richtungen verstellbar. Es ist möglich, den MSG-Lichtbogenschweisskopf derart anzuordnen, dass entweder der Laserstahl und der MSG-Lichtbogen in der Laserschweisszone gemeinsam wirken, oder der Laserstahl und der MSG-Lichtbogen in getrennten Prozesszonen wirken.

Die erfindungsgemässe Vorrichtung wird nachfolgend anhand von in den Zeichnungen schematisch, nicht massstabsgetreu dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste Ausführungsform einer Orbitalschweissvorrichtung mit einem Orbitalwagen, einem Laserschweisskopf zum Verbinden eines ersten Rohrendes und eines zweiten Rohrendes und einem Transportfahrzeug in einer Übersichts-Schrägansicht;
- Fig. 2: den Orbitalwagen mit dem Laserschweisskopf in einer Detailansicht quer zur Rohrachse;
- Fig. 3: den Orbitalwagen mit dem Laserschweisskopf, einer Drahtdüse und einer Prozessgasdüse in einer Detailansicht A-A parallel zur Rohrachse;
- Fig. 4: eine zweite Ausführungsform einer Orbitalschweissvorrichtung mit einem Orbitalwagen, einem Laserschweisskopf, einem MSG- Lichtbogenschweisskopf und einem Transportfahrzeug in einer Übersichts-Schrägansicht; und
- Fig. 5: den Orbitalwagen mit dem Laserschweisskopf und dem MSG-Lichtbogenschweisskopf in einer Detailansicht parallel zur Rohrachse.

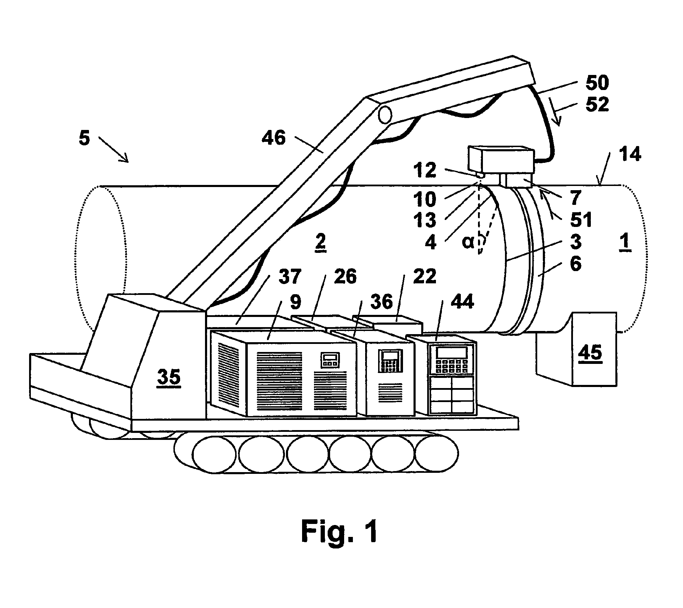

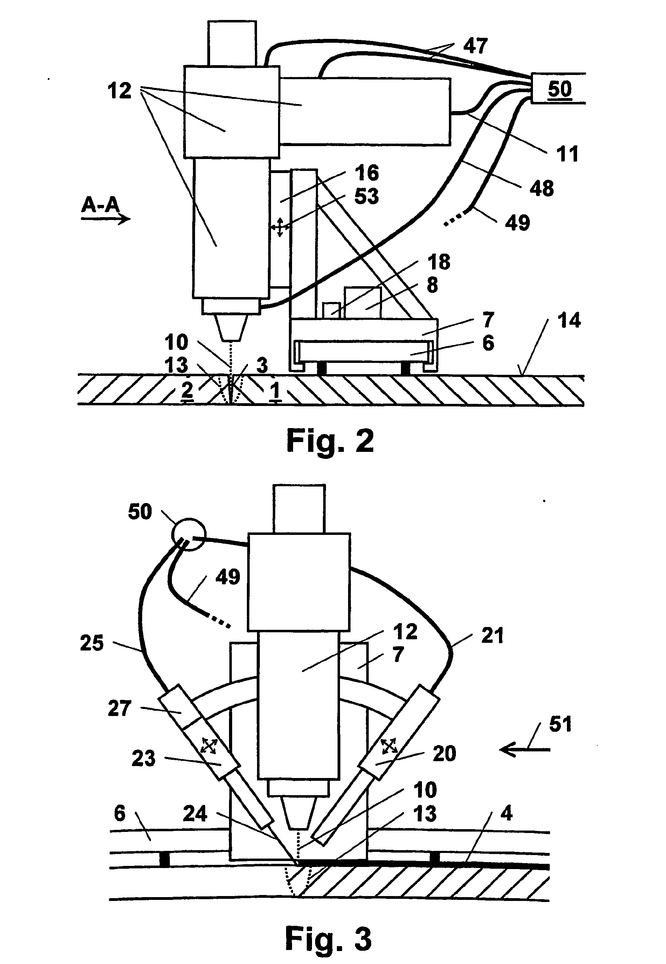

Eine erste Ausführungsform der Erfindung zeigen die Figuren 1, 2 und 3 in unterschiedlichen Anschichten und Detaillierungsgraden. Fig. 1 stellt die gesamte Orbitalschweissvorrichtung in einer übersichtsartigen Schrägansicht auf eine Pipelinebaustelle dar. Ein erstes Rohrende 1 und ein zweites Rohrende 2 einer horizontal auf Land zu verlegenden Pipeline 5 sind mittels einer bekannten, nicht dargestellten Innenzentriervorrichtung, mindestens eines Rohrkrans (nicht dargestellt) und Rohrabstützungen 45 derart ausgerichtet und zentriert, dass zwischen dem ersten Rohrende 1 und dem zweiten Rohrende 2 eine Umfangsfuge 3 mit einem definierten Spaltabstand von unter 0,3 mm und ohne Kantenversatz vorhanden ist. Auf dem ersten Rohrende 1 ist parallel zur Umfangsfuge 3 und in einem konstanten Abstand zur Aussenfläche 14 des ersten Rohrendes 1 ein Führungsring 6 in Form eines Spannbandes mit einer Führungsschiene angeordnet. Auf dem Führungsring 6 befindet sich ein Orbitalwagen 7, der rings um das erste Rohrende 1, wie mit dem Pfeil 51 symbolisiert, entlang dem Führungsring 6 motorisch verschiebbar geführt ist. Auf dem Orbitalwagen 7 ist ein Laserschweisskopf 12 montiert, der derart auf die Umfangsfuge 3 ausrichtbar ist, dass durch Richten eines von dem Laserschweisskopf 12 fokussierten Laserstrahls 10 in eine Laserschweisszone 13 und orbitalem motorischem Verschieben des Orbitalwagens 7 eine Schweissnaht 4, hier eine Aussen-Schweissnaht 4, entlang der Umfangsfuge 3 herstellbar ist. Die Höhe der Rohrabstützung 45 ist derart gewählt, dass ein Verschieden des Orbitalwagens 7 um 360° rings um das erste Rohrende möglich ist. Der Laserstrahl 10 wird von einer Hochleistungs-Faserlaserstrahlquelle 9 erzeugt, die von dem Orbitalwagen 7 beabstandet auf einem Transportfahrzeug 35 schwingungsgedämpft untergebracht ist. Der erzeugte Laserstahl 10 wird über einen flexiblen Lichtwellenleiter 11 (siehe Fig. 2), der in einem Schlauchpaket 50, das über einen Kran 46 des Transportfahrzeugs 35 zum Orbitalwagen 7 geführt wird, von der Hochleistungs-Faserlaserstrahlquelle 9 zum Laserschweisskopf 12 geleitet. Das Schlauchpaket 50 wird über den Kran 46 derart nachgeführt, wie von dem Pfeil 52 symbolisiert, dass der Orbitalwagen 7 ungehindert verschoben werden kann. Der Kran 46 kann weiters zur Montage des Führungsrings 6 und des Orbitalwagens und zum Halten einer Abschirmvorrichtung (nicht dargestellt) verwendet werden, welche die Schweissstelle vor der Umgebung und umgekehrt abschirmt, einerseits um das Bedienpersonal vor gefährlichen Reflektionen des Laserstahls zu schützen, andererseits um Zugluft, Feuchtigkeit und Verunreinigungen von der Schweissstelle fernzuhalten. Auf dem Transportfahrzeug ist ausserdem ein Generator 36 zumindest zur Erzeugung der zum Betrieb der Hochleistungs-Faserlaserstrahlquelle 9 benötigten Leistung und ein Kühlsystem 37 zumindest zum Kühlen der Hochleistungs-Faserlaserstrahlquelle 9 angeordnet. Auf weitere Bezugszeichen der Fig. 1 wird im Folgenden in der Beschreibung der anderen Figuren eingegangen. Weiters wird in der Beschreibung der folgenden Figuren auf Bezugszeichen vorangegangener Figuren zurückgegriffen.

Fig. 2 zeigt den auf dem Führungsring 6 verschiebbar gelagerten Orbitalwagen 7 aus Fig. 1 in einer vereinfachten Detailansicht quer zur Rohrachse. Auf dem Orbitalwagen 7 ist eine Vorschubeinrichtung 8 angeordnet, die in den Führungsring 6 derart eingreift, dass der Orbitalwagen 7 mit einer definierten Vorschubgeschwindigkeit um das erste Rohrende und die Umfangsfuge 3, die von einem V-formigen Stoss mit sehr kleinem Öffnungswinkel gebildet wird, orbital elektromotorisch bewegt werden kann. Um die orbitale Lage α des Orbitalwagens 7 relativ zu einer Bezugslage erfassen zu können, ist ein Orbitallageerfassungssensor 18 am Orbitalwagen 7 montiert, der beispielsweise als ein elektronischer Winkelencoder ausgeführt ist. Der Laserschweisskopf 12 ist über Verstellmittel 16, mittels welcher der Laserstrahl 10 relativ zur Umfangsfuge 3 durch Verstellen des gesamten Laserschweisskopfs 12 relativ zum Orbitalwagen 7 ausrichtbar sind, am Orbitalwagen 7 montiert. Die beispielsweise servomotorischen Verstellmittel 16 ermöglichen, entsprechend den Pfeilen 53, sowohl ein Verstellen des Laserschweisskopfes 12 senkrechter Richtung zum Rohr, so dass beispielsweise die Fokuslage verstellt werden kann, als auch ein Verstellen parallel zur Rohrachse zum exakten Ausrichten des Laserstrahls 10 auf die Umfangsfuge 3.

Selbstverständlich ist es alternativ möglich, die Verstellmittel 16 derart auszugestalten, dass der Laserschweisskopf 12 in weiteren Freiheitsgraden verstellbar ist oder der Laserstrahls 10 ergänzend oder ausschliesslich auf optischem Weg beispielsweise über eine Fokussier- oder Umlenkeinheit des Laserschweisskopfes verstellbar ist. Der in dem Schlauchpaket 50 zum Orbitalwagen 7 geführte Lichtwellenleiter 11 leitet den von der Hochleistungs-Faserlaserstrahlquelle 9 emittierten Laserstrahl 10 zum Laserschweisskopf 12, der den Laserstrahl 10 auf die Umfangsfuge 3 oder auf einen Punkt nahe der Umfangsfuge 3 fokussiert, so dass der Werkstoff des ersten Rohrendes 1 und des zweiten Rohrendes 2 innerhalb einer thermischen Einflusszone des Laserstrahls 10, der Laserschweisszone 13 aufschmilzt und eine Schweissnaht 4 entsteht. Da der Laserschweisskopf 12 einer hohen thermischen Belastung ausgesetzt ist, wird ist Schlauchpaket 50 eine Kühl-Heiz-Kreislaufleitung 47 mit Vor- und Rückfluss untergebracht, die alle zu kühlenden oder heizenden Teile des Laserschweisskopfes 12 oder weitere am Orbitalwagen 7 angeordneten Teile mit Kühl- oder Heizflüssigkeit des auf dem Transportwagen befindlichen Kühlsystems 37 versorgt. Eine Kommunikationsleitung 49 im Schlauchpaket 50 in Form eines Kabels liefert insbesondere Strom an die Vorschubeinheit 8 und ermöglicht die Kommunikation sämtlicher am Orbitalwagen 7 mittel- oder unmittelbar angeordneten Sensoren und Aktoren mit einem Steuerrechner 44, der sich auf dem Transportfahrzeug 35 befindet und den gesamten Schweissprozess steuert und überwacht. Um den Laserschweisskopf 12 vor Spritzern oder anderen Verunreinigungen zu schützen, wird vom Transportfahrzeug 35 gelieferte Druckluft über eine Druckluftleitung 48 im Schlauchpaket 50 zum Laserschweisskopf 12 geleitet, so dass insbesondere eine vor der Fokussieroptik des Laserschweisskopf 12 angeordnete Schutzscheibe mit eine konstanten Druckluftstrom beaufschlagt werden kann.

In Fig. 3 wird der Laserschweisskopf 12 in einer Detailansicht A-A gemäss Fig. 2 parallel zur Rohrachse gezeigt. Mittelbar auf dem Orbitalwagen 7 ist am Laserschweisskopf 12 eine Prozessgasdüse 20 zur Zufuhr von Prozessgas in den Bereich der Laserschweisszone 13 montiert. Die Versorgung der Prozessgasdüse 20 erfolgt über einen von dem Orbitalwagen 7 beabstandeten, auf dem Transportfahrzeug 35 befindlichen Prozessgasspeicher 22, der über eine Prozessgasleitung 21, die über das Schlauchpaket 50 zum Orbitalwagen 7 geführt wird, mit der Prozessgasdüse 20 in Verbindung steht. Als Prozessgase eignen sich insbesondere inerte und aktive Gase, wie z.B. bevorzugt Argon, Helium, N₂, CO₂ oder O₂ in geeignetem Mischungsverhältnis. Ebenfalls mittelbar auf dem Orbitalwagen 7, auf der anderen Seite des Laserschweisskopfes 12, ist eine Drahtdüse 23 zur Zufuhr eines Drahts 24 in die Laserschweisszone 13 montiert. Durch die Zufuhr des Drahts 24 und das somit erfolgende Einbringen eines Zusatzwerkstoffs ist es möglich, die Spaltüberbrückbarkeit der Umfangsfuge 3 zu erhöhen. Der Draht 24 wird von einer auf dem Transportfahrzeug 35 untergebrachten Drahtvorschubeinheit 26 über eine Drahtzufuhrleitung 25, die über das Schlauchpaket 50 zum Orbitalwagen 7 gelangt, zugeführt. Zur Erwärmung des Drahts 24 ist unmittelbar vor der Drahtdüse 23 eine Drahterwärmungseinheit 27 angeordnet, die den Draht 24 beispielsweise induktiv erwärmt. Anstelle eines Heissdrahts kann bevorzugt alternativ ein unerwärmter Kaltdraht zugeführt werden. Im gezeigten Ausführungsbeispiel wird der Draht 24 schleppend zugeführt. Alternativ ist auch eine stechende oder seitliche Drahtzufuhr realisierbar. Anstelle einer separaten Prozessgasdüse 20 kann die Prozessgaszufuhr koaxial zum Laserstrahl oder über die Drahtdüse 23 erfolgen. Die Prozessgasdüse 20 und die Drahtdüse 23 sind alternativ unmittelbar am Orbitalwagen 7 montiert und relativ zu diesem in mindestens einem Freiheitsgrad ausrichtbar.

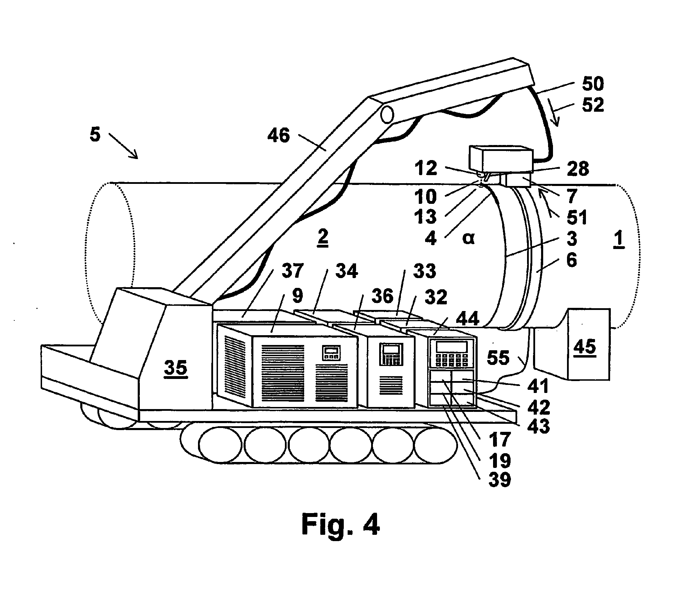

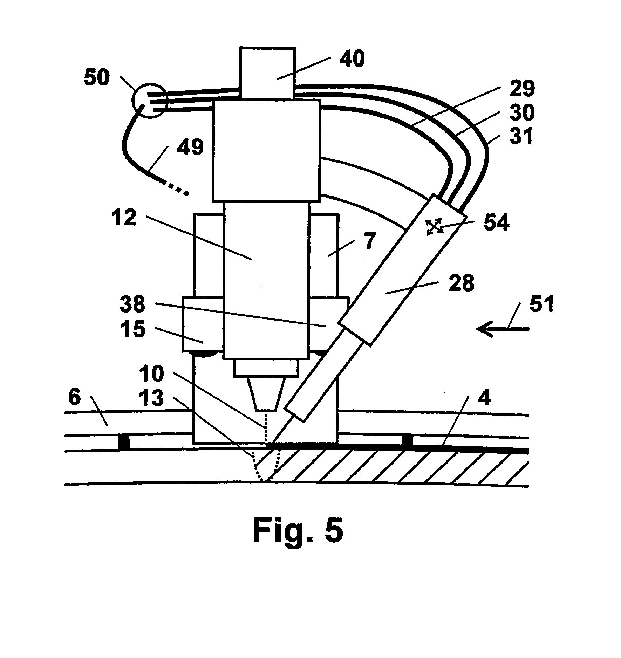

Eine zweite Ausführungsform einer Orbitalschweissvorrichtung zeigt Fig. 4 in einer Übersichts-Schrägansicht auf die gesamte Vorrichtung und Fig. 5 in einer Detailansicht parallel zur Rohrachse auf den Orbitalwagen. Im Folgenden werden die Figuren 4 und 5 gemeinsam beschrieben, wobei lediglich auf die Unterschiede zur ersten Ausführungsform eingegangen, weshalb hiermit auf die oben bereits erläuterten Bezugszugszeichen verwiesen sei. Anstelle der Zufuhr eines von einer Drahtvorschubeinheit 26 über eine Drahtzufuhrleitung 25 über eine Drahtdüse 23 gelieferten Drahts 24 und eines von einem Prozessgasspeicher 22 über eine Prozessgasleitung 21 zu einer Prozessgasdüse 20 geleiteten Prozessgases kommt ein aus dem Stand der Technik bekannter Metallschutzgas-Lichtbogenschweisskopf 28 zum Einsatz. Der MSG-Lichtbogenschweisskopf 28 ist mittelbar auf dem Orbitalwagen 7 angeordnet, indem er auf dem Laserschweisskopf 12 montiert ist. Der MSG-Lichtbogenschweisskopf 28 ist relativ zum Laserschweisskopf 12 und somit relativ zum Orbitalwagen 7 in mehreren Freiheitsgraden motorisch ausrichtbar, wie mittels der Pfeile 54 symbolisiert. Zur Versorgung des MSG-Lichtbogenschweisskopfs 28 sind auf dem Transportfahrzeug 35 eine frei programmierbare MSG-Stromquelle 32, ein MSG-Prozessgasspeicher 33 und eine MSG-Drahtvorschubeinheit 34 angeordnet, die über eine MSG-Stromleitung 29, eine MSG-Prozessgasleitung 30 und eine MSG-Drahtzufuhrleitung 31 mit dem MSG-Lichtbogenschweisskopf 28 zur MSG-Lichtbogenbildung bzw. zur MSG-Prozessgaszufuhr bzw. zur MSG-Drahtzufuhr in Verbindung stehen. Die Leitungen 28, 29, 30 werden über das Schlauchpaket 50 zum Orbitalwagen 7 geführt. Ausserdem verbindet eine Masseleitung 55 das erste Rohrende 1 und das zweite Rohrende 2 mit der MSG-Stromquelle 32. Der MSG-Lichtbogenschweisskopf 28 ist derart ausgerichtet, dass der Laserstahl 10 und der MSG-Lichtbogen in der Laserschweisszone 13 gemeinsam wirken. Alternativ ist es jedoch möglich, den MSG-Lichtbogenschweisskopf 28 derart auszurichten, dass der Laserstahl 10 und der MSG-Lichtbogen in getrennten Prozesszonen wirken, wobei der Laserstrahl 10 dem MSG-Lichtbogen bevorzugt vorausläuft. Alternativ ist es auch möglich, den Laserstrahl 10 nachlaufend relativ zum MSG-Lichtbogen auszurichten. Durch die Kombination des Laserschweissens mit dem MSG-Lichtbogenschweissen kann die Schweissgeschwindigkeit weiter erhöht, die Prozessstabilität verbessert, über die MSG-Drahtzufuhr ein Zusatzwerkstoffs eingebracht und ein geringerer Temperaturgradient erreicht werden, so dass die Aufhärtungsneigung verringert wird. Weiters wird eine höhere Spaltüberbrückbarkeit erzielt. Die Kombination des Laserschweissens mit dem MSG-Lichtbogenschweissen ist besonders dann vorteilhaft, wenn eine signifikante Erhöhung der Schweissgeschwindigkeit angestrebt wird oder der Einsatz grösserer Mengen von Zusatzwerkstoff aus metallurgischen Gründen, aus Gründen der Spaltfüllung oder auch infolge bestimmter Normvorschriften erforderlich ist.

Die Steuerung und Überwachung des gesamten Schweissprozesses erfolgt über den Steuerrechner 44, der über die Kommunikationsleitung 49 mit Sensoren und Aktoren des Orbitalwagens 7, der dort angeordneten Komponenten und mit den auf dem Transportfahrzeug 35 befindlichen Einheiten in Kommunikationsverbindnung steht. Zur Erhöhung der Prozesssicherheit und der Schweissgeschwindigkeit sind in dem Steuerrechner 44 mehrere Steuerung-, Regelungs-, Überwachungs- und Protokollierungsmittel integriert, die im Folgenden beschrieben werden. Diese Mittel sind beispielsweise entweder als verkabelte Schaltung oder als eine entsprechend programmierte Steuerungs-Regelungs-Vorrichtung ausgeführt.

Die Steuerrechner 44 weist eine erste Prozessparametersteuerung 19 auf, die derart ausgebildet und über den Steuerrechner 44 mit dem Orbitallageerfassungssensor 18, der Hochleistungs-Faserlaserstrahlquelle 9, der MSG-Stromquelle 32 und der Vorschubeinrichtung 8 verschaltet ist, dass Laserstrahlungsparameter, MSG-Lichtbogenparameter und die Vorschubgeschwindigkeit des Orbitalwagens 7 in Abhängigkeit von der orbitalen Lage α des Orbitalwagens 7 automatisch anpassbar sind. Somit ist es möglich, beispielsweise bei Fallnaht oder Steignaht mit unterschiedlichen Schweissparametern zu schweissen.

Fig. 5 zeigt einen auf dem Laserschweisskopf 12 montierten, der bereits gebildeten oder beabsichtigten, durch die Ausrichtung des Laserstrahls 10 definierten Laserschweisszone 13 vorauslaufenden Nahtfolgesensor 15, mittels welchem die Lage der Umfangsfuge 3 relativ zu der beabsichtigten Laserschweisszone 13 erfassbar ist. Der Nahtfolgesensor 15 ist beispielsweise als ein lichtoptischer Sensor ausgeführt, der die Lage der Umfangsfuge 3 über Triangulation detektiert. Ein mit der Lage verknüpftes Signal des Nahtfolgesensors 15 wird dem Steuerrechner 44, der mit den Verstellmitteln 16 verschaltet ist, zugeführt. Der Steuerrechner 44 weist eine Lageregelung 17 auf, die derart ausgebildet und über den Steuerrechner 44 mit dem Nahtfolgesensor 15 und den Verstellmitteln 16 verschaltet ist, dass das Ausrichten des Laserstrahls 10 und insbesondere des MSG-Lichtbogenschweisskopfs 28 in Abhängigkeit von der erfassten Lage der Umfangsfuge 3 automatisch regelbar ist. Somit wird der Laserstrahl 10 automatisch auf die Umfangsfuge 3 ausgerichtet, so dass selbst bei einem nicht exakt parallel zur Umfangsfuge 3 montiertem Führungsring 6 oder einer ungeraden Umfangsfuge 3 eine Fehlausrichtung des Laserstrahls 10 und des MSG-Lichtbogens vermieden wird.

Weiters ist ein Prozesssensor 40 an dem Laserschweisskopf 12 derart angeordnet, dass eine elektromagnetische Strahlung, insbesondere eine thermische Strahlung, eine optische Strahlung oder eine Plasmastrahlung aus der Laserschweisszone 13 über den Prozesssensor 40 erfassbar ist. Eine zweite Prozessparametersteuerung 41, die im Steuerrechner 44 integriert ist, ist derart ausgebildet und über den Steuerrechnet 44 mit dem Prozesssensor 40, der Hochleistungs-Faserlaserstrahlquelle 9, der MSG-Stromquelle 32, der Vorschubeinrichtung 8 und den Verstellmitteln 16 verschaltet, dass Laserstrahlungsparameter, MSG-Lichtbogenparameter, die Vorschubgeschwindigkeit des Orbitalwagens 7 und die Ausrichtung des Laserstrahls 10 in Abhängigkeit von der erfassten Strahlung automatisch anpassbar sind.

Über einen ebenfalls am Laserschweisskopf 12 montierten, der Laserschweisszone 13 nachlaufenden optischen Nahtqualitätssensor 38, der beispielsweise als lichtoptischer Sensor ausgeführt ist, sind optischen Aufnahmen der erzeugten Schweissnaht 4 herstellbar. Auf dem Steuerungsrechner 44 sind Protokollierungsmittel 39 vorgesehen, die über den Steuerrechner 44 mit dem Nahtqualitätssensor 38 zum Speichern und optischen Wiedergeben der Aufnahmen der erzeugten Schweissnaht 4 verschaltet sind, so dass nach Durchführung des Schweissvorgangs eine erneute Wiedergabe des aufgenommenen Schweissvorgangs möglich ist. Dies ist insbesondere zur Ermittlung allfälliger Fehler in der Schweissnaht 4 vorteilhaft, da bei zusätzlichem Erfassen und Aufzeichnen der orbitalen Lage α ein rasches Auffinden der Fehlerstelle möglich ist.

In einer Weiterbildung sind ausserdem Bildverarbeitungsmittel 42 im Steuerrechner 44 integriert, die derart ausgebildet und über den Steuerrechner 44 mit den Protokollierungsmitteln 39 verschaltet sind, dass die Aufnahmen der erzeugten Schweissnaht 4 elektronisch bewertbar sind und ein Auswertungssignal, das mit der Qualität der Schweissnaht 4 verknüpft ist, ausgebbar ist. Im Falle eines Fehlers in der Schweissnaht 4 ist somit die Ausgabe oder Aufzeichnung einer Fehlermeldung möglich. Gegebenfalls wird der Schweissprozess nach Ausgabe der Fehlermeldung angehalten und ein Warnsignal ausgegeben, um ein schnelles Beheben des Fehlers zu ermöglichen und Stillstandzeiten gering zu halten.

Eine dritte, ebenfalls in dem Steuerrechner 44 integrierte Prozessparametersteuerung 43 ist derart ausgebildet und über den Steuerrechner 44 mit den Bildverarbeitungsmitteln 42, der Hochleistungs-Faserlaserstrahlquelle 9, der MSG-Stromquelle 32, der Vorschubeinrichtung 8 und den Verstellmitteln 16 verschaltet ist, dass Laserstrahlungsparameter, MSG-Lichtbogenparameter, die Vorschubgeschwindigkeit des Orbitalwagens 7 und die Ausrichtung des Laserstrahls 10 in Abhängigkeit von dem Auswertungssignal automatisch anpassbar sind. Einer nicht ausreichenden Qualität der Schweissnaht 4 oder Schweissnahtfehlern kann mittels dieser Steuerung automatisch durch Anpassung von Prozessparametern entgegengewirkt werden.

Alternativ ist er möglich, anstelle aller drei Prozessparametersteuerungen 19, 41, 43 nur eine oder zwei beliebige der drei Prozessparametersteuerungen 19, 41, 43 einzusetzen, da selbige voneinander unabhängig sind.

Der Einsatz weiterer Sensoren und Steuerungen zur Erhöhung der Prozesssicherheit ist selbstverständlich möglich. Die oben beschriebenen Anordnungsvarianten stellen lediglich eine möglich, nicht beschränkende Ausführungsform dar. So können die beschriebenen Sensoren beispielsweise anstelle am Laserschweisskopf 12 mittelbar oder unmittelbar auch an anderen Elementen des Orbitalwagens 7 angeordnet sein. Anstelle eines Steuerrechners 44 ist der Einsatz mehrerer unabhängiger Steuerungs- oder Regelungseinheiten, die sich beispielsweise direkt am Orbitalwagen 7 befinden, möglich.

## Patentansprüche

1. Orbitalschweißvorrichtung für den mobilen Einsatz zum Verbinden eines ersten Rohrendes (1) und eines zweiten Rohrendes (2) entlang einer Umfangsfuge (3) mittels mindestens einer Schweißnaht (4), insbesondere zur Herstellung einer auf Land zu verlegenden Pipeline (5), mit wenigstens
- einem zu dem erstens Rohrende. (1) und der Umfangsfuge (3) ausrichtbaren Führungsring (6),
- einem zumindest entlang einem Teilabschnitt des Führungsrings (6) verschiebbar geführten Orbitalwagen (7),
- einer Vorschubeinrichtung (8), mittels welcher der Orbitalwagen (7) entlang dem Führungsring (6) motorisch verschiebbar ist,
- einem auf dem Orbitalwagen (7) angeordneten Schweißkopf, der als Laserschweißkopf (12) zum Richten eines Laserstrahls (10) in eine Laserschweißzone (13) zur Erzeugung der Schweißnaht (4), wobei durch Verschieben des Orbitalwagens (7) die Schweißnaht (4) zumindest entlang einem Teilabschnitt der Umfangsfuge (3) herstellbar ist,
- einem von dem Orbitalwagen (7) beabstandeten Schweißaggregat das über die Verbindungsleitung mit dem Laserschweißkopf (12) in Verbindung steht und mittel- oder unmittelbar die zur Herstellung der Schweißnaht (4) erforderliche Leistung zur Verfügung stellt und mit
- einer Verbindungsleitung, die als Lichtwellenleiter (11) zum Leiten des Laserstrahls (10) zum Orbitalwagen (7) ausgebildet ist,
**dadurch gekennzeichnet, dass** zur Ermöglichung der Herstellung der Schweißverbindung mittels nur eines einzigen Orbitalumlaufs das Schweißaggregat als eine Hochleistungs-Faserlaserstrahlquelle (9), mittels welcher der laserstrahl erzengbar ist ausgebildet ist, dass die Orbitalschweiβvorrichtung einen Orbitallageerfassungssenor (18) zum Erfasen der orbitelen lage (α) des Orbitalwagens (7) und eine erste Prozessparametersteuerung (19) aufweist, und dass die erste Prozessparametersteuerung (19) derart ausgebildet und mit dem Orbitallageerfassungssensor (18) und zumindest mit der Hochleistungs-Faserlaserstrahlquelle (9) verschaltet ist, dass Laseratrahlungsparameter Abhängigkeit von der orbitalen Lage (α) des Orbitalwagens (7) automatisch anpassbar sind.

2. Orbitalschweißvorrichtung nach Anspruch 1, **dadurch gekennzeichnet, dass**
- der Führungsring (6) auf der Außenfläche (14) des ersten Rohrendes (1) anordbar ausgestaltet und
- die erzeugbare Schweißnaht als Außen-Schweißnaht (4) ausgebildet ist.

3. Orbitalschweißvorrichtung nach Anspruch 1 oder 2, **gekennzeichnet durch** wenigstens
- eine auf dem Orbitalwagen (7) mittel- oder unmittelbar angeordnete Prozessgasdüse (20) zur Zufuhr von Prozessgas in den Bereich der Laserschweißzone (13),
- eine Prozessgasleitung (21) und
- einen von dem Orbitalwagen (7) beabstandeten Prozessgasspeicher (22), der über die Prozessgasleitung (21) mit der Prozessgasdüse (20) zur Prozessgaszufuhr in Verbindung steht.

4. Orbitalschweißvorrichtung nach einem der Ansprüche 1 bis 3, 1 **gekennzeichnet durch** wenigstens
- eine auf dem Orbitalwagen (7) mittel- oder unmittelbar angeordnete Drahtdüse (23) zur Zufuhr eines Drahts (24) in die Laserschweißzone (13),
- eine Drahtzufuhrleitung (25) und
- eine von dem Orbitalwagen (7) beabstandete Drahtvorschubeinheit (26), die über die Drahtzufuhrleitung (25) mit der Drahtdüse (23) zur Drahtzufuhr in Verbindung steht.

5. Orbitalschweißvorrichtung nach Anspruch 4, **gekennzeichnet durch** eine der Drahtdüse (23) vorangeschaltete Drahterwärmungseinheit (27) zur Erwärmung des Drahts (24).

6. Orbitalschweißvorrichtung nach Anspruch 1 oder 2, **gekennzeichnet durch** mindestens
- einen auf dem Orbitalwagen (7) mittel- oder unmittelbar angeordneten MSG-Lichtbogenschweißkopf (28),
- eine MSG-Stromleitung (29),
- eine MSG-Prozessgasleitung (30),
- eine MSG-Drahtzufuhrleitung (31),
- eine von dem Orbitalwagen (7) beabstandete MSG-Stromquelle (32), die über die MSG-Stromleitung (29) mit dem MSG-Lichtbogenschweißkopf (28) zur MSG-Lichtbogenbildung in Verbindung steht,
- eine von dem Orbitalwagen (7) beabstandete MSG-Drahtvorschubeinheit (34), die über die MSG-Drahtzufuhrleitung (31) mit dem MSG-Lichtbogenschweißkopf (28) zur MSG-Drahtzufuhr in Verbindung steht.

7. Orbitalschweißvorrichtung nach Anspruch 6, **dadurch gekennzeichnet, dass** der MSG-Lichtbogenschweißkopf (28) derart auf dem Orbitalwagen (7) mittel oder unmittelbar angeordnet ist, dass der Laserstrahl (10) und der MSG-Lichtbogen in der Laserschweißzone (13) gemeinsam wirken.

8. Orbitalschweißvorrichtung nach Anspruch 6, **dadurch gekennzeichnet, dass** der MSG-Lichtbogenschweißkopf (28) derart auf dem Orbitalwagen (7) mittel- oder unmittelbar angeordnet ist, dass der Laserstrahl (10) und der MSG-Lichtbogen in getrennten Prozesszonen wirken.

9. Orbitalschweißvorrichtung nach einem der Ansprüche 1 bis 8, **dadurch gekennzeichnet, dass** mit dem Orbltallageerfassungssensor (18) zumindest die Vorschubgeschwindigkeit des Orbitalwagens (7) in Abhängigkeit von der orbitalen Lage (α) des Orbitalwagens (7) automatisch anpassbar ist.

10. Orbitalschweißvorrichtung nach einem der Ansprüche 1 bis 9, **gekennzeichnet durch**
- einen auf dem Orbitalwagen (7) mittel- oder unmittelbar derart angeordneten Nahtfolgesensor (15), mit dem die Lage der Umfangsfuge (3) relativ zu der beabsichtigten Laserschweißzone (13) erfassbar ist,
- Verstellmittel (16), mittels welcher der Laserstrahl (10) relativ zur Umfangsfuge (3) ausrichtbar sind, und
- eine Lageregelung (17), die erart ausgebildet und mit dem Nahtfolgesensor (15) und den Verstellmitteln (16) verschaltet ist, dass das Ausrichten des Laserstrahls (10), in Abhängigkeit von der erfassten Lage der Umfangsfuge (3) automatisch regelbar ist.

11. Orbitalschweißvorrichtung nach einem der Ansprüche 1 bis 10, **gekennzeichnet durch**
- einen auf dem Orbitalwagen (7) mittel- oder unmittelbar - insbesondere an dem Laserschweißkopf (12) - derart angeordneten Prozesssensor (40), dass eine elektromagnetische Strahlung - insbesondere eine thermische Strahlung, eine optische Strahlung oder eine Plasmastrahlung- aus der Laserschweißzone (13) erfassbar ist, und
- eine zweite Prozessparametersteuerung (41), die derart ausgebindet und mit dem Prozesssensor (40) und zumindest der Hochleistungs-Faserlaserstrahlquelle (9) verschaltet ist, das Laserstrahlungsparameter in Abhängigkeit von der erfassten Strahlung automatisch anpassbar sind.

12. Orbitalschweißvorrichtung nach einem der Ansprüche 1 bis 11, **gekennzeichnet durch**
- einen auf dem Orbitalwagen (7) mittel- oder unmittelbar angeordneten, der Laserschweißzone (13) nachlaufenden optischen Nahtqualitätssensor (38) zum Herstellen von optischen Aufnahmen der erzeugten Schweißnaht (4) und
- Protokollierungsmittel (39), die mit dem Nahtqualitätssensor (38) zum Speichern und optischen Wiegergeben der Aufnahme der erzeugten Schweißnaht (4) verschaltet sind.

13. Orbitalschweißvorrichtung nach Anspruch 12, **gekennzeichnet durch** Bildverarbeitungsmittel (42), die derart ausgebildet und mit den Protokollierungsmitteln (39) verschaltet sind, dass die Aufnahmen der erzeugten Schweißnaht (4) elektronisch bewertbar sind und ein Auswertungssignal, das mit der Qualität der Schweißnaht (4) verknüpft ist, ausgebbar ist.

14. Orbitalschweißvorrichtung nach Anspruch 13, **gekennzeichnet, durch** eine dritte Prozessparametersteuerung (43), die derart ausgebildet und zumindest mit den Bildverarbeitungsmitteln (42) und der Hochleistungs-Faserlaserstrahlquelle (9) verschaltet ist, dass Laserstrahlungsparameter in Abhängigkeit von dem Auswertungssignal automatisch anpassbar sind.

15. Orbitalschweißvorrichtung nach einem der Ansprüche 1 bis 14, **dadurch gekennzeichnet, dass**
- eine Hochleistungs-Faserlaserstrahiquelle (9),
- ein Generator (36) zumindest zur Erzeugung der zum Betrieb der Hochleistungs-Faserlaserstrahlquelle (9) benötigten Leistung und
- ein zumindest der Hochleistungs-Faserlaserstrahlquelle (9) zugeordnetes Kühlsystem (37),
auf einen Transportfahrzeug (35) angeordnet sind.

16. Orbitalschweiβvorrichtung nach Anspruch 15, **dadurch gekennzeichnet,**
**dass** zusätzlich
- ein Prozessgasspeicher (22) und
- eine Drahtvorschubeinheit (26)
auf dem Transportfahrzeug (35) angeordnet sind.

17. Orbitalschweiβvorrichtung nach Anspruch 15 oder 16, **dadurch gekennzeichnet, dass** zusätzlich
- eine MSG-Stromquelle (32),
- ein MSG-Prozessgasspeicher (33) und
- eine MSG-Drahtvorschubeinheit (34)
auf dem Transportfahrzeug (35) angeordnet sind.

## Claims

1. Orbital welding device for mobile use in connecting a first pipe end (1) and a second pipe end (2) along a circumferential joint (3) by means of at least one weld seam (4), in particular for producing a pipeline (5) to be laid on land, said device comprising at least
- a guide ring (6), which can be oriented towards the first pipe end (1) and the circumferential joint (3),
- an orbital carriage (7), which is guided displaceably at least along a segment of the guide ring (6),
- an advancing device (8), by means of which the orbital carriage (7) can be displaced in a motorized manner along the guide ring (6),
- a welding head, which is arranged on the orbital carriage (7) as a laser welding head (12) for directing a laser beam (10) into a laser welding zone (13) to produce the weld seam (4), wherein the weld seam (4) can be produced at least along a segment of the circumferential joint (3) by displacing the orbital carriage (7),
- a welding unit, which is situated at a distance from the orbital carriage (7), is connected to the laser welding head (12) by way of the connecting line and directly or indirectly provides the power required for producing the weld seam (4), and comprising
- a connecting line, which is formed as an optical waveguide (11) for guiding the laser beam (10) to the orbital carriage (7),
**characterized in that**, to make it possible to produce the welded connection by means of only a single orbital rotation, the welding unit is formed as a high-power fibre laser beam source (9), by means of which the laser beam can be generated, **in that** the orbital welding device has an orbital position detecting sensor (18) for detecting the orbital position (α) of the orbital carriage (7) and a first process parameter controller (19), and **in that** the first process parameter controller (19) is formed in such a way and is connected to the orbital position detecting sensor (18) and at least to the high-power fibre laser beam source (9) in such a way that laser radiation parameters can be automatically adapted in dependence on the orbital position (α) of the orbital carriage (7).

2. Orbital welding device according to Claim 1, **characterized in that**
- the guide ring (6) is configured such that it can be arranged on the outer surface (14) of the first pipe end (1) and
- the weld seam that can be produced is formed as an outward weld seam (4).

3. Orbital welding device according to Claim 1 or 2, **characterized by** at least
- a process gas nozzle (20), arranged directly or indirectly on the orbital carriage (7), for supplying process gas into the region of the laser welding zone (13),
- a process gas line (21) and
- a process gas store (22), which is situated at a distance from the orbital carriage (7) and is in connection with the process gas nozzle (20) by way of the process gas line (21) for supplying the process gas.

4. Orbital welding device according to one of Claims 1 to 3, **characterized by** at least
- a wire nozzle (23), arranged directly or indirectly on the orbital carriage (7), for supplying a wire (24) into the laser welding zone (13),
- a wire supply line (25) and
- a wire advancing unit (26), which is situated at a distance from the orbital carriage (7) and is in connection with the wire nozzle (23) by way of the wire supply line (25) for supplying the wire.

5. Orbital welding device according to Claim 4, **characterized by** a wire heating unit (27), arranged upstream of the wire nozzle (23), for heating the wire (24).

6. Orbital welding device according to Claim 1 or 2, **characterized by** at least
- an GMAW arc welding head (28), arranged directly or indirectly on the orbital carriage (7),
- an GMAW power line (29),
- an GMAW process gas line (30),
- an GMAW wire supply line (31),
- an GMAW power source (32), which is situated at a distance from the orbital carriage (7) and in connection with the GMAW arc welding head (28) by way of the GMAW power line (29) for forming an GMAW arc,
- an GMAW wire advancing unit (34), which is situated at a distance from the orbital carriage (7) and in connection with the GMAW arc welding head (28) by way of the GMAW wire supply line (31) for supplying the GMAW wire.

7. Orbital welding device according to Claim 6, **characterized in that** the GMAW arc welding head (28) is arranged directly or indirectly on the orbital carriage (7) in such a way that the laser beam (10) and the GMAW arc act together in the laser welding zone (13).

8. Orbital welding device according to Claim 6, **characterized in that** the GMAW arc welding head (28) is arranged directly or indirectly on the orbital carriage (7) in such a way that the laser beam (10) and the GMAW arc act in separate process zones.

9. Orbital welding device according to one of Claims 1 to 8, **characterized in that**, with the orbital position detecting sensor (18), at least the advancing speed of the orbital carriage (7) can be adapted automatically in dependence on the orbital position (α) of the orbital carriage (7).

10. Orbital welding device according to one of Claims 1 to 9, **characterized by** a seam tracking sensor (15), which is arranged directly or indirectly on the orbital carriage (7) and with which the position of the circumferential joint (3) can be detected in relation to the intended laser welding zone (13),
- adjusting means (16), by means of which the laser beam (10) can be aligned in relation to the circumferential joint (3), and
- a position control (17), which is formed in such a way and is connected to the seam tracking sensor (15) and the adjusting means (16) in such a way that the aligning of the laser beam (10) can be automatically controlled in dependence on the detected position of the circumferential joint (3).

11. Orbital welding device according to one of Claims 1 to 10, **characterized by**
- a process sensor (40), which is arranged directly or indirectly on the orbital carriage (7) - in particular on the laser welding head (12) - in such a way that an electromagnetic radiation - in particular a thermal radiation, an optical radiation or a plasma radiation - from the laser welding zone (13) can be detected, and
- a second process parameter controller (41), which is formed in such a way and is connected to the process sensor (40) and at least the high-power fibre laser beam source (9) in such a way that laser radiation parameters can be automatically adapted in dependence on the radiation detected.

12. Orbital welding device according to one of Claims 1 to 11, **characterized by**
- an optical seam quality sensor (38), arranged directly or indirectly on the orbital carriage (7) and trailing the laser welding zone (13), for producing optical recordings of the weld seam (4) produced and
- logging means (39), which are connected to the seam quality sensor (38) for storing and optically reproducing the recording of the weld seam (4) produced.

13. Orbital welding device according to Claim 12, **characterized by** image processing means (42), which are formed in such a way and are connected to the logging means (39) in such a way that the recordings of the weld seam (4) produced can be assessed electronically and an evaluation signal associated with the quality of the weld seam (4) can be output.

14. Orbital welding device according to Claim 13, **characterized by** a third process parameter controller (43), which is formed in such a way and is connected at least to the image processing means (42) and the high-power fibre laser beam source (9) in such a way that laser radiation parameters can be automatically adapted in dependence on the evaluation signal.

15. Orbital welding device according to one of Claims 1 to 14, **characterized in that**
- a high-power fibre laser beam source (9),
- a generator (36), at least for generating the power required for operating the high-power fibre laser beam source (9), and
- a cooling system (37), assigned at least to the high-power fibre laser beam source (9),
are arranged on a transporting vehicle (35).

16. Orbital welding device according to Claim 15, **characterized in that**
- a process gas store (22) and
- a wire advancing unit (26)
are additionally arranged on the transporting vehicle (35).

17. Orbital welding device according to Claim 15 or 16, **characterized in that**
- an GMAW power source (32),
- an GMAW process gas store (33) and
- an GMAW wire advancing unit (34)
are additionally arranged on the transporting vehicle (35).

## Revendications

1. Dispositif de soudage orbital pour l'utilisation mobile, pour relier une première extrémité de tuyau (1) et une deuxième extrémité de tuyau (2) le long d'un joint périphérique (3) au moyen d'au moins un cordon de soudure (4), en particulier pour fabriquer un pipeline (5) à poser sur le terrain, comprenant au moins
- un anneau de guidage (6) pouvant être aligné sur la première extrémité de tuyau (1) et le joint périphérique (3),
- un chariot orbital (7) guidé déplaçable au moins le long d'un tronçon de l'anneau de guidage (6),
- un dispositif d'avancement (8), au moyen duquel le chariot orbital (7) est déplaçable de façon motorisée le long de l'anneau de guidage (6),
- une tête de soudage agencée sur le chariot orbital (7), réalisée comme une tête de soudage laser (12) pour diriger un faisceau laser (10) dans une zone de soudage laser (10) pour générer le cordon de soudure (4), le cordon de soudure (4) pouvant être réalisé au moins le long d'un tronçon du joint périphérique (3), par le déplacement du chariot orbital (7),
- un groupe de soudage, distant du chariot orbital (7) et qui est relié à la tête de soudage laser (12) par l'intermédiaire d'une ligne de liaison et qui met à disposition directement ou indirectement la puissance nécessaire pour la réalisation du cordon de soudure (4), et
- une ligne de liaison qui est formée par une fibre optique (11) pour conduire le faisceau laser (10) au chariot orbital (7),
**caractérisé en ce que** pour permettre la réalisation de la liaison par soudage au moyen uniquement d'une unique circulation orbitale, le groupe de soudage est formé par une source laser à fibre à forte puissance (9) permettant de générer le faisceau laser, **en ce que** le dispositif de soudage orbital présente un capteur de détection de la position orbitale (18) pour détecteur la position orbitale (α) du chariot orbital (7) et un premier pilotage de paramètre de processus (19), et **en ce que** le premier pilotage de paramètre de processus (19) est formé et connecté avec le capteur de détection de la position orbitale (18) et au moins avec la source laser à fibre à forte puissance (9) de façon que des paramètres de rayonnement laser sont automatiquement adaptables en fonction de la position orbitale (α) du chariot orbital (7).

2. Dispositif de soudage orbital selon la revendication 1, **caractérisé en ce que**
- l'anneau de guidage (6) est conçu pour pouvoir être disposé sur la surface externe (14) de la première extrémité de tuyau (1) et
- le cordon de soudure (4) réalisable est un cordon de soudure externe (4).

3. Dispositif de soudage orbital selon la revendication 1 ou 2, **caractérisé par** au moins
- une buse à gaz de processus (20) agencée directement ou indirectement sur le chariot orbital (7), pour l'alimentation en gaz de processus dans la région de la zone de soudage laser (13),
- une ligne à gaz de processus (21) et
- un réservoir à gaz de processus (22), distant du chariot orbital (7) et relié à la buse à gaz de processus (20) par l'intermédiaire de la ligne à gaz de processus (21), pour l'alimentation en gaz de processus.

4. Dispositif de soudage orbital selon l'une quelconque des revendications 1 à 3, **caractérisé par** au moins
- une buse à fil (23) agencée directement ou indirectement sur le chariot orbital (7), pour l'alimentation d'un fil (24) dans la zone de soudage laser (13),
- une ligne d'alimentation en fil (25) et
- une unité d'alimentation en fil (26), distante du chariot orbital (7) et reliée à la buse à fil (23) par l'intermédiaire de la ligne d'alimentation en fil (25), pour l'alimentation au fil.

5. Dispositif de soudage orbital selon la revendication 4, **caractérisé par** une unité de chauffage de fil (27) en amont de la buse à fil (23), pour chauffer le fil (24).

6. Dispositif de soudage orbital selon la revendication 1 ou 2, **caractérisé par** au moins
- une tête de soudage à l'arc électrique MIG-MAG (28) agencée directement ou indirectement sur le chariot orbital (7),
- une ligne de courant MIG-MAG (29),
- une ligne à gaz de processus MIG-MAG (30),
- une ligne d'alimentation de fil MIG-MAG (31),
- une source de courant MIG-MAG (32), distante du chariot orbital (7) et reliée à la tête de soudage à l'arc électrique MIG-MAG (28) par l'intermédiaire de la ligne de courant MIG-MAG (29), pour la formation d'arc électrique MIG-MAG,
- une unité d'alimentation en fil (34), distante du chariot orbital (7), et reliée à la tête de soudage à l'arc électrique MIG-MAG (28) par l'intermédiaire de la ligne d'alimentation en fil MIG-MAG (31) pour l'alimentation en fil MIG-MAG.

7. Dispositif de soudage orbital selon la revendication 6, **caractérisé en ce que** la tête de soudage à l'arc électrique MIG-MAG (28) est agencée directement ou indirectement sur le chariot orbital (7) de façon que le faisceau laser (10) et l'arc électrique MIG-MAG opèrent conjointement dans la zone de soudage laser (13).

8. Dispositif de soudage orbital selon la revendication 6, **caractérisé en ce que** la tête de soudage à l'arc électrique MIG-MAG (28) est agencée directement ou indirectement sur le chariot orbital (7) de façon que faisceau laser (10) et l'arc électrique MIG-MAG opèrent dans des zones de processus disjointes.

9. Dispositif de soudage orbital selon l'une quelconque des revendications 1 à 8, **caractérisé en ce que** grâce au capteur de détection de la position orbitale (18), au moins la vitesse d'avancement du chariot orbital (7) est automatiquement adaptable en fonction de la position orbitale (α) du chariot orbital (7).

10. Dispositif de soudage orbital selon l'une quelconque des revendications 1 à 9, **caractérisé par**
- un capteur suiveur de cordon (15) agencé de telle façon directement ou indirectement sur le chariot orbital (7), avec lequel la position du joint périphérique (3) par rapport à la zone de soudage laser (13) envisagée peut être détectée,
- des moyens de réglage (16) permettant d'orienter le faisceau laser (10) par rapport au joint périphérique (3), et
- une régulation de position (17) qui est formée et connectée avec le capteur suiveur de cordon (15) et les moyens de réglage (16) de façon que l'orientation du faisceau laser (10) peut être régulée automatiquement en fonction de la position détectée du joint périphérique (3).

11. Dispositif de soudage orbital selon l'une quelconque des revendications 1 à 10, **caractérisé par**
- un capteur de processus (40) agencé directement ou indirectement sur le chariot orbital (7) - en particulier sur la tête de soudage laser (12) - de façon qu'un rayonnement électromagnétique - en particulier un rayonnement thermique, un rayonnement optique ou un rayonnement plasma - provenant de la zone de soudage laser (13) peut être détecté, et
- un deuxième pilotage de paramètre de processus (41) qui est formé et connecté au capteur de processus (40) et au moins à la source laser à fibre à forte puissance (9) de façon que des paramètres de rayonnement laser sont automatiquement adaptables en fonction du rayonnement détecté.

12. Dispositif de soudage orbital selon l'une quelconque des revendications 1 à 11, **caractérisé par**
- un capteur optique de la qualité de cordon (38) agencé directement ou indirectement sur le chariot orbital (7) subséquent à la zone de soudage laser (13), pour réaliser des prises de vues optiques du cordon de soudure (4) obtenu et
- des moyens de consignation (39) qui sont connectés au capteur de la qualité de cordon (38) pour le stockage et la restitution optique de la prise de vue du cordon de soudure (4) généré.

13. Dispositif de soudage orbital selon la revendication 12, **caractérisé par** des moyens de traitement d'image (42), qui sont formés et connectés aux moyens de consignation (39) de façon que les prises de vue du cordon de soudure (4) obtenu peuvent être évaluées électroniquement et un signal d'évaluation qui est associé à la qualité du cordon de soudure (4) peut être émis.

14. Dispositif de soudage orbital selon la revendication 13, **caractérisé par** un troisième pilotage de paramètre de processus (43) qui est formé et connecté au moins aux moyens de traitement d'image (42) et à la source laser à fibre à forte puissance (9), de façon que des paramètres de rayonnement laser sont automatiquement adaptables en fonction du signal d'évaluation.

15. Dispositif de soudage orbital selon l'une quelconque des revendications 1 à 14, **caractérisé en ce que**
- une source laser à fibre à forte puissance (9),
- un générateur (36) au moins pour générer la puissance nécessaire au fonctionnement de la source laser à fibre à forte puissance (9), et
- un système de refroidissement (37) affecté au moins à la source laser à fibre à forte puissance (9),
sont agencés sur un véhicule de transport (35).

16. Dispositif de soudage orbital selon la revendication 15, **caractérisé en ce qu'**en outre
- un réservoir à gaz de processus (22) et
- une unité d'alimentation en fil (26)
sont agencés sur le véhicule de transport (35).

17. Dispositif de soudage orbital selon la revendication 15 ou 16, **caractérisé en ce qu'**en outre
- une source de courant MIG-MAG (32),
- un réservoir à gaz de processus MIG-MAG (33) et
- une unité d'alimentation en fil MIG-MAG (34)
sont agencés sur le véhicule de transport (35).
